# EUROPEAN PATENT APPLICATION

(11) **EP 4 572 475 A1**
(43) Date of publication of application: **18.06.2025**
(21) Application number: 23870654.3
(22) Date of filing: 22.09.2023
(51) Int. Cl.: H04W 72/04

(54) **COMMUNICATION METHOD AND COMMUNICATION APPARATUS**

(30) Priority: 30.09.2022 CN 202211231231
(71) Applicant: Huawei Technologies Co., Ltd., Shenzhen, Guangdong 518129 (CN)
(72) Inventor: WU, Hao, Shenzhen, Guangdong 518129 (CN); PENG, Wenjie, Shenzhen, Guangdong 518129 (CN)
(74) Representative: MERH-IP Matias Erny Reichl Hoffmann Patentanwälte PartG mbB
(86) International application number: PCT/CN2023/120865
(87) International publication number: WO 2024/067423

(57) **Abstract**

This application provides a communication method and a communication apparatus, and relates to the communication field. In the method, a second terminal device sends a first measurement result to a first terminal device, and the first terminal device may determine a candidate carrier based on the first measurement result and a second measurement result. The first measurement result includes a CBR that is of each carrier in a first carrier list and that is obtained by the second terminal device through measurement, and the second measurement result includes a CBR that is of each carrier in the first carrier list and that is obtained by the first terminal device through measurement. Alternatively, the first measurement result includes a second carrier list including a carrier whose CBR is less than a corresponding CBR threshold in a first carrier list, and the second measurement result includes a CBR that is of each carrier in the second carrier list and that is obtained by the first terminal device through measurement. In the method, the candidate carrier is selected based on results of measuring a CBR of a carrier by two terminal devices that perform sidelink communication. This helps ensure normal sidelink communication.

## Description

This application claims priority to Chinese Patent Application No. 202211231231.4, filed with the China National Intellectual Property Administration on September 30, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A vehicle-to-everything (vehicle-to-everything, V2X) system supports multi-carrier transmission. Usually, before transmission, a transmitter needs to first select a candidate carrier, and then select an appropriate carrier from the candidate carrier for transmission. Specifically, the transmitter first measures a channel busy ratio (channel busy ratio, CBR) of a carrier in an available carrier list determined based on a to-be-sent service, uses a carrier whose CBR is less than a corresponding CBR threshold in the available carrier list as a candidate carrier, and then selects a carrier based on the CBR of the candidate carrier to transmit the to-be-transmitted service.

In new radio (new radio, NR) V2X, there is not only a broadcast service but also unicast and multicast services in sidelink (sidelink, SL) transmission. Communication quality of a peer end needs to be ensured for the unicast and multicast services. In this case, if a candidate carrier selected by a transmitter is not applicable to a receiver, the receiver may fail in reception.

### SUMMARY

This application provides a communication method and a communication apparatus. A candidate carrier is selected based on results of measuring a CBR of a carrier by two terminal devices that perform sidelink communication. This helps ensure normal sidelink communication.

According to a first aspect, a switching method is provided. The method may be performed by a first terminal device; or may be performed by a component (for example, a processor, a chip, or a chip system) of the first terminal device; or may be implemented by a logical module or software that can implement all or some functions of the first terminal device. The first terminal device is a data sender.

The method includes: receiving a first measurement result from a second terminal device, and determining a candidate carrier based on the first measurement result and a second measurement result. The first measurement result includes a channel busy ratio (channel busy ratio, CBR) that is of each carrier in a first carrier list and that is obtained by the second terminal device through measurement, and the second measurement result includes a CBR that is of each carrier in the first carrier list and that is obtained by the first terminal device through measurement. Alternatively, the first measurement result includes a second carrier list, the second carrier list includes at least one first carrier in the first carrier list, and a CBR that is of the first carrier and that is obtained by the second terminal device through measurement is less than a corresponding CBR threshold. The second measurement result includes a CBR that is of each carrier in the second carrier list and that is obtained by the first terminal device through measurement. The candidate carrier is used to send data through a sidelink between the first terminal device and the second terminal device.

According to the communication method provided in this application, the second terminal device may measure a CBR of a carrier, and then feed back a measurement result to the first terminal device. The first terminal device may select the candidate carrier based on results of measuring the CBR of the carrier by the first terminal device and the second terminal device. In this way, it can be ensured as much as possible that the selected candidate carrier is applicable to both the first terminal device and the second terminal device. This helps ensure normal sidelink communication.

In a possible implementation, before the receiving a first measurement result from a second terminal device, the method further includes: determining the first carrier list; and sending the first carrier list to the second terminal device. The first carrier list is a carrier list configured by an upper layer of the first terminal device, a carrier list supportable by a network, a carrier list supportable by the first terminal device, or an intersection set of any two or three of the foregoing lists.

In a possible implementation, the first carrier list is a carrier list supported by both the first terminal device and the second terminal device; before the receiving a first measurement result from a second terminal device, the method further includes: sending a configuration message to the second terminal device, where the configuration message includes the first carrier list and a feedback periodicity, and the configuration message is used by the second terminal device to periodically feed back the CBR of each carrier in the first carrier list based on the feedback periodicity; and the receiving a first measurement result from a second terminal device includes: receiving the first measurement result fed back by the second terminal device based on the feedback periodicity.

In a possible implementation, the first carrier list is a carrier list configured by an upper layer of the second terminal device, a carrier list supportable by a network, a carrier list supportable by the second terminal device, or an intersection set of any two or three of the foregoing lists.

In a possible implementation, the first measurement result includes the CBR that is of each carrier in the first carrier list and that is obtained by the second terminal device through measurement. The determining a candidate carrier based on the first measurement result and a second measurement result includes: for any carrier in the first carrier list, determining the carrier as the candidate carrier when the carrier meets a first condition; or if there is no sidelink grant on all carriers in the first carrier list, for any carrier in the first carrier list, determining the carrier as the candidate carrier when the carrier meets the first condition; or if there is a sidelink grant on a part of or all carriers in the first carrier list, for any carrier that triggers carrier selection in the first carrier list, determining the carrier as the candidate carrier when the carrier meets a second condition, and for any carrier that does not trigger carrier selection in the first carrier list, determining the carrier as the candidate carrier when the carrier meets the first condition. The first condition is that a CBR that is of the carrier and that is obtained by the first terminal device through measurement is less than a first CBR carrier selection threshold corresponding to the carrier, and a CBR that is of the carrier and that is obtained by the second terminal device through measurement is less than a second CBR carrier selection threshold corresponding to the carrier, or the first condition is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier. The second condition is that a CBR that is of the carrier and that is obtained by the first terminal device through measurement is less than a first CBR carrier keeping threshold corresponding to the carrier, and a CBR that is of the carrier and that is obtained by the second terminal device through measurement is less than a second CBR carrier keeping threshold corresponding to the carrier, or the second condition is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

Based on this solution, a carrier whose CBRs obtained by the first terminal device and the second terminal device through measurement are both less than corresponding CBR carrier selection/keeping thresholds is selected as the candidate carrier, or a carrier whose average value of CBRs obtained by the first terminal device and the second terminal device through measurement is less than a corresponding CBR carrier selection/keeping threshold is selected as the candidate carrier, so that it can be ensured that the candidate carrier is applicable to both the first terminal device and the second terminal device. This can ensure normal sidelink communication.

In a possible implementation, the first measurement result includes the second carrier list. The determining a candidate carrier based on the first measurement result and a second measurement result includes: for any carrier in the second carrier list, determining the carrier as the candidate carrier when the carrier meets a first condition; or if there is no sidelink grant on all carriers in the second carrier list, for any carrier in the second carrier list, determining the carrier as the candidate carrier when the carrier meets the first condition; or if there is a sidelink grant on a part of or all carriers in the second carrier list, for any carrier that triggers carrier selection in the second carrier list, determining the carrier as the candidate carrier when the carrier meets a second condition, and for any carrier that does not trigger carrier selection in the second carrier list, determining the carrier as the candidate carrier when the carrier meets the first condition. The first condition is that a CBR that is of the carrier and that is obtained by the first terminal device through measurement is less than a first CBR carrier selection threshold corresponding to the carrier; and the second condition is that a CBR that is of the carrier and that is obtained by the first terminal device through measurement is less than a first CBR carrier keeping threshold corresponding to the carrier.

Based on this solution, measurement results, on a first terminal device side and a second terminal device side, for a CBR of the candidate carrier selected by the first terminal device are both less than corresponding CBR carrier selection/keeping thresholds, so that it can be ensured that the candidate carrier is applicable to both the first terminal device and the second terminal device. This can ensure normal sidelink communication.

In a possible implementation, the first measurement result further includes a CBR of each carrier in the second carrier list.

In a possible implementation, the determining a candidate carrier based on the first measurement result and a second measurement result includes: for any carrier in the second carrier list, determining the carrier as the candidate carrier when the carrier meets a first condition; or if there is no sidelink grant on all carriers in the second carrier list, for any carrier in the second carrier list, determining the carrier as the candidate carrier when the carrier meets the first condition; or if there is a sidelink grant on a part of or all carriers in the second carrier list, for any carrier that triggers carrier selection in the second carrier list, determining the carrier as the candidate carrier when the carrier meets a second condition, and for any carrier that does not trigger carrier selection in the second carrier list, determining the carrier as the candidate carrier when the carrier meets the first condition. The first condition is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier. The second condition is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

Based on this solution, because a CBR average value of CBRs, on a first terminal device side and a second terminal device side, of the candidate carrier selected by the first terminal device is less than a corresponding CBR carrier selection/keeping threshold, it helps ensure that the candidate carrier is applicable to both the first terminal device and the second terminal device. This can ensure normal sidelink communication.

In a possible implementation, the first measurement result further includes the second CBR carrier selection threshold and/or the second CBR carrier keeping threshold.

In a possible implementation, before the receiving a first measurement result from a second terminal device, the method further includes: sending a priority of the data or a priority of a logical channel corresponding to the data to the second terminal device, where the priority of the data or the priority of the logical channel corresponding to the data is used by the second terminal device to determine the second CBR carrier selection threshold and/or the second CBR carrier keeping threshold.

In a possible implementation, before the receiving a first measurement result from a second terminal device, the method further includes: sending the second CBR carrier selection threshold and/or the second CBR carrier keeping threshold to the second terminal device.

For example, if the first terminal device cannot determine the second CBR carrier selection threshold and/or the second CBR carrier keeping threshold, the second terminal device may send the second CBR carrier selection threshold and/or the second CBR carrier keeping threshold to the first terminal device after determining the second CBR carrier selection threshold and/or the second CBR carrier keeping threshold. In this way, the first terminal device may select the candidate carrier based on the second CBR carrier selection threshold and/or the second CBR carrier keeping threshold.

In a possible implementation, the method may further include: determining a target carrier from the candidate carrier, and sending information about the target carrier (for example, an index or an identifier of the target carrier) to the second terminal device. Then, the first terminal device may send data on the target carrier, and correspondingly, the second terminal device may receive the data on the target carrier.

Because the candidate carrier is applicable to the first terminal device and the second terminal device, sidelink communication on the target carrier can be ensured.

According to a second aspect, a switching method is provided. The method may be performed by a second terminal device; or may be performed by a component (for example, a processor, a chip, or a chip system) of the second terminal device; or may be implemented by a logical module or software that can implement all or some functions of the second terminal device. The second terminal device is a data receiver.

The method includes: determining a first measurement result; and sending the first measurement result to a first terminal device. The first measurement result includes a channel busy ratio CBR that is of each carrier in a first carrier list and that is obtained by the second terminal device through measurement, or the first measurement result includes a second carrier list, the second carrier list includes at least one first carrier in the first carrier list, and a CBR that is of the first carrier and that is obtained by the second terminal device through measurement is less than a corresponding CBR threshold. In addition, the first measurement result is used by the first terminal device to determine a candidate carrier, and the candidate carrier is used to send data through a sidelink between the first terminal device and the second terminal device.

According to the communication method provided in this application, the second terminal device may measure a CBR of a carrier, and then feed back a measurement result to the first terminal device. The first terminal device may select the candidate carrier based on results of measuring the CBR of the carrier by the first terminal device and the second terminal device. In this way, it can be ensured as much as possible that the selected candidate carrier is applicable to both the first terminal device and the second terminal device. This helps ensure normal sidelink communication.

In a possible implementation, before the determining a first measurement result, the method further includes: receiving the first carrier list from the first terminal device. The first carrier list is a carrier list configured by an upper layer of the first terminal device, a carrier list supportable by a network, a carrier list supportable by the first terminal device, or an intersection set of any two or three of the foregoing lists.

In a possible implementation, the first carrier list is a carrier list supported by both the first terminal device and the second terminal device; before the determining a first measurement result, the method further includes: receiving a configuration message from the first terminal device, where the configuration message includes the first carrier list and a feedback periodicity, and the configuration message is used by the second terminal device to periodically feed back the CBR of each carrier in the first carrier list based on the feedback periodicity; and the sending the first measurement result to a first terminal device includes: sending the first measurement result to the first terminal device based on the feedback periodicity.

In a possible implementation, the first carrier list is a carrier list configured by an upper layer of the second terminal device, a carrier list supportable by a network, a carrier list supportable by the second terminal device, or an intersection set of any two or three of the foregoing lists.

In a possible implementation, the first measurement result further includes a CBR of each carrier in the second carrier list.

In a possible implementation, the determining a first measurement result includes: measuring the CBR of each carrier in the first carrier list; and for any carrier in the first carrier list, determining the carrier as the first carrier when the carrier meets a third condition; or if there is no sidelink grant on all carriers in the first carrier list, for any carrier in the first carrier list, determining the carrier as the first carrier when the carrier meets the third condition; or if there is a sidelink grant on a part of or all carriers in the first carrier list, for any carrier that triggers carrier selection in the first carrier list, determining the carrier as the first carrier when the carrier meets a fourth condition, and for any carrier that does not trigger carrier selection in the first carrier list, determining the carrier as the first carrier when the carrier meets the third condition. The third condition is that a CBR that is of the carrier and that is obtained by the second terminal device through measurement is less than a second CBR carrier selection threshold corresponding to the carrier; and the fourth condition is that a CBR that is of the carrier and that is obtained by the second terminal device through measurement is less than a second CBR carrier keeping threshold corresponding to the carrier.

In a possible implementation, the first measurement result further includes the second CBR carrier selection threshold and/or the second CBR carrier keeping threshold.

In a possible implementation, before the determining a first measurement result, the method further includes: receiving, from the first terminal device, a priority of the data or a priority of a logical channel corresponding to the data; and determining the second CBR carrier selection threshold and/or the second CBR carrier keeping threshold based on the priority of the data or the priority of the logical channel corresponding to the data.

In a possible implementation, before the determining a first measurement result, the method further includes: receiving the second CBR carrier selection threshold and/or the second CBR carrier keeping threshold from the first terminal device.

In a possible implementation, the method may further include: receiving information about a target carrier from the first terminal device. The target carrier belongs to the candidate carrier.

Because the candidate carrier is applicable to the first terminal device and the second terminal device, sidelink communication on the target carrier can be ensured.

According to a third aspect, a switching method is provided. The method may be performed by a first terminal device; or may be performed by a component (for example, a processor, a chip, or a chip system) of the first terminal device; or may be implemented by a logical module or software that can implement all or some functions of the first terminal device. The first terminal device is a data sender.

The method includes: measuring a CBR of each carrier in a first carrier list, where the first carrier list is a carrier list configured by an upper layer of the first terminal device, a carrier list supportable by a network, a carrier list supportable by the first terminal device, or an intersection set of any two or three of the foregoing lists; sending a first measurement result to a second terminal device, where the first measurement result includes the CBR of each carrier in the first carrier list, or the first measurement result includes a second carrier list, the second carrier list includes at least one first carrier in the first carrier list, and a CBR that is of the first carrier and that is obtained by the first terminal device through measurement is less than a corresponding CBR threshold; and receiving information about a candidate carrier from the second terminal device, where the candidate carrier is obtained by the second terminal device based on the first measurement result and measurement performed by the second terminal device on a CBR of each carrier in the first carrier list or the second carrier list, and the candidate carrier is used to send data through a sidelink between the first terminal device and the second terminal device.

According to the communication method provided in this application, the first terminal device may measure a CBR of a carrier, and then feed back a measurement result to the second terminal device. The second terminal device may select the candidate carrier based on results of measuring the CBR of the carrier by the second terminal device and the first terminal device. Then, the second terminal device notifies the first terminal device of the information about the candidate carrier. In this way, it can be ensured as much as possible that the selected candidate carrier is applicable to both the first terminal device and the second terminal device. This helps ensure normal sidelink communication.

In a possible implementation, before the sending a first measurement result to a second terminal device, the method further includes: for any carrier in the first carrier list, determining the carrier as the first carrier when the carrier meets a first condition; or if there is no sidelink grant on all carriers in the first carrier list, for any carrier in the first carrier list, determining the carrier as the first carrier when the carrier meets the first condition; or if there is a sidelink grant on a part of or all carriers in the first carrier list, for any carrier that triggers carrier selection in the first carrier list, determining the carrier as the first carrier when the carrier meets a second condition, and for any carrier that does not trigger carrier selection in the first carrier list, determining the carrier as the first carrier when the carrier meets the first condition. The first condition is that a CBR that is of the carrier and that is obtained by the first terminal device through measurement is less than a first CBR carrier selection threshold corresponding to the carrier; and the second condition is that a CBR that is of the carrier and that is obtained by the first terminal device through measurement is less than a first CBR carrier keeping threshold corresponding to the carrier.

Based on this solution, the first terminal device may select carriers whose CBRs are less than the corresponding first CBR carrier selection/keeping threshold from the first carrier list, and feed back these carriers to the second terminal device.

In a possible implementation, the first measurement result further includes a CBR of each carrier in the second carrier list.

In a possible implementation, the first measurement result further includes one or more of the following threshold information: the first CBR carrier selection threshold, the first CBR carrier keeping threshold, a second CBR carrier selection threshold, or a second CBR carrier keeping threshold, and the threshold information is used by the second terminal device to determine the candidate carrier.

In a possible implementation, the first measurement result further includes a priority of the data or a priority of a logical channel corresponding to the data, the priority of the data or the priority of the logical channel corresponding to the data is used by the second terminal device to determine a second CBR carrier selection threshold and/or a second CBR carrier keeping threshold, and the second CBR carrier selection threshold and/or the second CBR carrier keeping threshold are/is used by the second terminal device to determine the candidate carrier.

In a possible implementation, the method may further include: receiving the information about the candidate carrier from the second terminal device; and determining a target carrier from the candidate carrier, and sending information about the target carrier (for example, an index or an identifier of the target carrier) to the second terminal device. Then, the first terminal device may send data on the target carrier, and correspondingly, the second terminal device may receive the data on the target carrier.

Because the candidate carrier is applicable to the first terminal device and the second terminal device, sidelink communication on the target carrier can be ensured.

According to a fourth aspect, a switching method is provided. The method may be performed by a second terminal device; or may be performed by a component (for example, a processor, a chip, or a chip system) of the second terminal device; or may be implemented by a logical module or software that can implement all or some functions of the second terminal device. The second terminal device is a data receiver.

The method includes: receiving a first measurement result from a first terminal device, where the first measurement result includes a CBR that is of each carrier in a first carrier list and that is obtained by the first terminal device through measurement, or the first measurement result includes a second carrier list, the first carrier list is a carrier list configured by an upper layer of the first terminal device, a carrier list supportable by a network, a carrier list supportable by the first terminal device, or an intersection set of any two or three of the foregoing lists, the second carrier list includes at least one first carrier in the first carrier list, and a CBR that is of the first carrier and that is obtained by the first terminal device through measurement is less than a corresponding CBR threshold; measuring a CBR of each carrier in the first carrier list or the second carrier list, to obtain a second measurement result; determining a candidate carrier based on the first measurement result and the second measurement result, where the candidate carrier is used to send data through a sidelink between the first terminal device and the second terminal device; and sending information about the candidate carrier to the first terminal.

According to the communication method provided in this application, the first terminal device may measure a CBR of a carrier, and then feed back a measurement result to the second terminal device. The second terminal device may select the candidate carrier based on results of measuring the CBR of the carrier by the second terminal device and the first terminal device. Then, the second terminal device notifies the first terminal device of the information about the candidate carrier. In this way, it can be ensured as much as possible that the selected candidate carrier is applicable to both the first terminal device and the second terminal device. This helps ensure normal sidelink communication.

In a possible implementation, the first measurement result includes the CBR of each carrier in the first carrier list. The determining a candidate carrier based on the first measurement result and the second measurement result includes: for any carrier in the first carrier list, determining the carrier as the candidate carrier when the carrier meets a third condition; or if there is no sidelink grant on all carriers in the first carrier list, for any carrier in the first carrier list, determining the carrier as the candidate carrier when the carrier meets the third condition; or if there is a sidelink grant on a part of or all carriers in the first carrier list, for any carrier that triggers carrier selection in the first carrier list, determining the carrier as the candidate carrier when the carrier meets a fourth condition, and for any carrier that does not trigger carrier selection in the first carrier list, determining the carrier as the candidate carrier when the carrier meets the third condition. The third condition is that a CBR that is of the carrier and that is obtained by the first terminal device through measurement is less than a first CBR carrier selection threshold corresponding to the carrier, and a CBR that is of the carrier and that is obtained by the second terminal device through measurement is less than a second CBR carrier selection threshold corresponding to the carrier, or the third condition is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier. The fourth condition is that a CBR that is of the carrier and that is obtained by the first terminal device through measurement is less than a first CBR carrier keeping threshold corresponding to the carrier, and a CBR that is of the carrier and that is obtained by the second terminal device through measurement is less than a second CBR carrier keeping threshold corresponding to the carrier, or the fourth condition is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

Based on this solution, a carrier whose CBRs obtained by the first terminal device and the second terminal device through measurement are both less than corresponding CBR carrier selection/keeping thresholds is selected as the candidate carrier, or a carrier whose average value of CBRs obtained by the first terminal device and the second terminal device through measurement is less than a corresponding CBR carrier selection/keeping threshold is selected as the candidate carrier, so that it can be ensured that the candidate carrier is applicable to both the first terminal device and the second terminal device. This can ensure normal sidelink communication.

In a possible implementation, the first measurement result further includes a CBR of each carrier in the second carrier list.

In a possible implementation, the first measurement result includes the second carrier list; and the determining a candidate carrier based on the first measurement result and the second measurement result includes: for any carrier in the second carrier list, determining the carrier as the candidate carrier when the carrier meets a third condition; or if there is no sidelink grant on all carriers in the second carrier list, for any carrier in the second carrier list, determining the carrier as the candidate carrier when the carrier meets the third condition; or if there is a sidelink grant on a part of or all carriers in the second carrier list, for any carrier that triggers carrier selection in the second carrier list, determining the carrier as the candidate carrier when the carrier meets a fourth condition, and for any carrier that does not trigger carrier selection in the second carrier list, determining the carrier as the candidate carrier when the carrier meets the third condition. The third condition is that a CBR that is of the carrier and that is obtained by the second terminal device through measurement is less than a second CBR carrier selection threshold corresponding to the carrier; and the fourth condition is that a CBR that is of the carrier and that is obtained by the second terminal device through measurement is less than a second CBR carrier keeping threshold corresponding to the carrier.

Based on this solution, measurement results, on a first terminal device side and a second terminal device side, for a CBR of the candidate carrier selected by the first terminal device are both less than corresponding CBR carrier selection/keeping thresholds, so that it can be ensured that the candidate carrier is applicable to both the first terminal device and the second terminal device. This can ensure normal sidelink communication.

In a possible implementation, the determining a candidate carrier based on the first measurement result and the second measurement result includes: for any carrier in the second carrier list, determining the carrier as the candidate carrier when the carrier meets a third condition; or if there is no sidelink grant on all carriers in the second carrier list, for any carrier in the second carrier list, determining the carrier as the candidate carrier when the carrier meets the third condition; or if there is a sidelink grant on a part of or all carriers in the second carrier list, for any carrier that triggers carrier selection in the second carrier list, determining the carrier as the candidate carrier when the carrier meets a fourth condition, and for any carrier that does not trigger carrier selection in the second carrier list, determining the carrier as the candidate carrier when the carrier meets the third condition. The third condition is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier; and the fourth condition is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

Based on this solution, because a CBR average value of CBRs, on a first terminal device side and a second terminal device side, of the candidate carrier selected by the second terminal device is less than a corresponding CBR carrier selection/keeping threshold, it helps ensure that the candidate carrier is applicable to both the first terminal device and the second terminal device. This can ensure normal sidelink communication.

In a possible implementation, the first measurement result further includes one or more of the following: the first CBR carrier selection threshold, the first CBR carrier keeping threshold, the second CBR carrier selection threshold, or the second CBR carrier keeping threshold.

In a possible implementation, the first measurement result further includes a priority of the data or a priority of a logical channel corresponding to the data; and the method further includes: determining the second CBR carrier selection threshold and/or the second CBR carrier keeping threshold based on the priority of the data or the priority of the logical channel corresponding to the data.

**In** a possible implementation, the method may further include: receiving information about a target carrier from the first terminal device. The target carrier belongs to the candidate carrier.

Because the candidate carrier is applicable to the first terminal device and the second terminal device, sidelink communication on the target carrier can be ensured.

According to a fifth aspect, a communication apparatus is provided, including a module or a unit configured to perform the method in any one of the first aspect or the possible implementations of the first aspect, or including a module or a unit configured to perform the method in any one of the second aspect or the possible implementations of the second aspect, or including a module or a unit configured to perform the method in any one of the third aspect or the possible implementations of the third aspect, or including a module or a unit configured to perform the method in any one of the fourth aspect or the possible implementations of the fourth aspect.

According to a sixth aspect, a communication apparatus is provided, including a processor. The processor is coupled to a memory, the memory is configured to store a computer program or instructions, and the processor is configured to execute the computer program or the instructions stored in the memory, to implement the method in any one of the first aspect or the possible implementations of the first aspect, or implement the method in any one of the second aspect or the possible implementations of the second aspect, or implement the method in any one of the third aspect or the possible implementations of the third aspect, or implement the method in any one of the fourth aspect or the possible implementations of the fourth aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a terminal device (for example, a first terminal device or a second terminal device). For example, the communication interface may be a transceiver or an input/output interface.

In another implementation, the apparatus is a chip in a terminal device (for example, a first terminal device or a second terminal device). For example, the communication interface may be an input/output interface.

According to a seventh aspect, a processor is provided, and includes an input circuit, an output circuit, and a processing circuit. The processing circuit is configured to receive a signal through the input circuit, and transmit a signal through the output circuit, so that the processor performs the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit. The circuit is separately used as the input circuit and the output circuit at different moments. Specific implementations of the processor and various circuits are not limited in this application.

According to an eighth aspect, a communication system is provided, including the first terminal device in the first aspect and/or the second terminal device in the second aspect, or including the first terminal device in the third aspect and/or the second terminal device in the fourth aspect.

According to a ninth aspect, a computer program product is provided. The computer program product includes a computer program (which may also be referred to as code or instructions), and when the computer program is run, a computer is enabled to perform the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

According to a tenth aspect, a computer-readable storage medium is provided. The computer-readable storage medium stores a computer program (which may also be referred to as code or instructions), and when the computer program is run on a computer, the computer is enabled to perform the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

According to an eleventh aspect, a chip is provided, including a processor. The processor is configured to invoke a computer program from a memory and run the computer program, to enable a communication apparatus on which the chip is installed to perform the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

### BRIEF DESCRIPTION OF DRAWINGS

FIG. 1 is a diagram of a communication system according to an embodiment of this application;
FIG. 2 is a diagram of selecting a candidate carrier according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a block diagram of a communication apparatus according to an embodiment of this application;
FIG. 8 is a block diagram of another communication apparatus according to an embodiment of this application; and
FIG. 9 is a diagram of a structure of a terminal device according to an embodiment of this application.

### DESCRIPTION OF EMBODIMENTS

The following describes technical solutions in embodiments of this application with reference to the accompanying drawings in embodiments of this application.

In the descriptions of this application, unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists. A and B may be singular or plural. In addition, in the descriptions of this application, unless otherwise specified, "a plurality of" means two or more. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference.

It should be understood that, in this application, descriptions similar to "in a case that... ", "if...", "when...", "provided that...", and the like may be used interchangeably.

The technical solutions in embodiments of this application may be applied to various communication systems, for example, a long term evolution (long term evolution, LTE) system, a 5th generation (5th Generation, 5G) mobile communication system, new radio (New Radio, NR), and another mobile communication system that may appear in the future.

For example, the technical solutions in embodiments of this application may be applied to a vehicle-to-everything (vehicle-to-everything, V2X) communication system, for example, vehicle-to-vehicle (vehicle-to-vehicle, V2V) communication, vehicle-to-pedestrian (vehicle-to-pedestrian, V2P) communication, a vehicle-to-network (vehicle-to-network, V2N) service, or vehicle-to-infrastructure (vehicle-to-infrastructure, V2I) communication, or for another example, communication between a mobile phone and a smart screen or communication between a mobile phone and VR glasses in an indoor commercial scenario.

A terminal device in embodiments of this application may be user equipment (user equipment, UE), a station (station), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a large screen, a vehicle-mounted device, a wearable device, a terminal device in a 5G network, a terminal device in a future evolved public land mobile network (public land mobile network, PLMN), or the like. This is not limited in embodiments of this application. In addition, in embodiments of this application, types of two terminal devices (a transmitter and a receiver) may be the same or may be different. For example, both terminal devices are mobile phones, or one terminal device is a mobile phone and the other terminal device is a notebook computer.

A network device in embodiments of this application is a radio access network (radio access network, RAN) node (or device) that connects a terminal device to a wireless network, and may also be referred to as a base station. For example, the network device may be an evolved NodeB (evolved NodeB, eNodeB), a transmission reception point (transmission reception point, TRP), a next generation NodeB (next generation NodeB, gNB) in a 5G mobile communication system, a base station in a future mobile communication system or an access point (access point, AP) in a Wi-Fi system, a radio controller in a cloud radio access network (cloud radio access network, CRAN) scenario, a relay station, an access point, a vehicle-mounted device, a wearable device, or a network device in another future evolved communication system. For another example, the network device may alternatively be a module or a unit that completes some functions of a base station, for example, may be a central unit (central unit, CU) or a distributed unit (distributed unit, DU). A specific technology and a specific device form that are used by the network device are not limited in this application.

In embodiments of this application, the terminal device includes a hardware layer, an operating system layer running above the hardware layer, and an application layer running above the operating system layer. The hardware layer includes hardware such as a central processing unit (central processing unit, CPU), a memory management unit (memory management unit, MMU), and memory (also referred to as main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant communication software. In addition, a specific structure of an execution body of a method provided in embodiments of this application is not specifically limited in embodiments of this application, provided that a program that records code for the method provided in embodiments of this application can be run to perform communication according to the method provided in embodiments of this application. For example, the execution body of the method provided in embodiments of this application may be a terminal device, a network device, or a functional module that can invoke and execute a program in a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media configured to store information. The term "machine-readable media" may include but is not limited to a radio channel, and various other media that can store, include, and/or carry instructions and/or data.

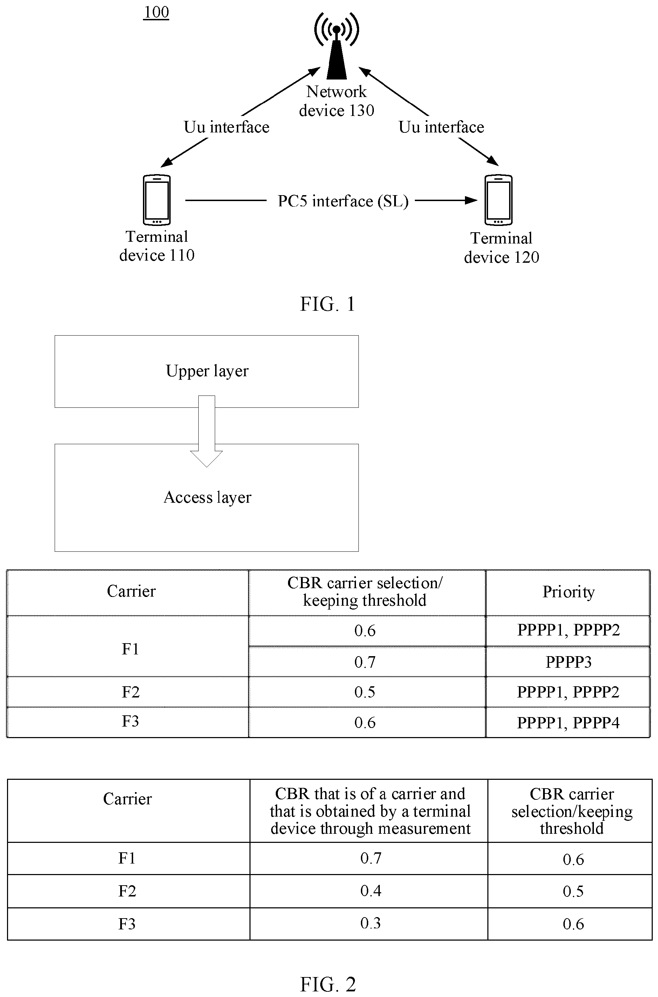

FIG. 1 is a block diagram of a communication system applicable to this application. Refer to FIG. 1. The system 100 includes two types of communication interfaces: a PC5 interface and a Uu interface. The PC5 interface is a direct communication interface between two terminal devices (for example, a terminal device 110 and a terminal device 120 shown in the figure). A direct communication link between terminal devices is also defined as a side link or a sidelink (sidelink, SL). The Uu interface is an interface for communication between a terminal device (for example, the terminal device 110 or the terminal device 120) and a network device 130.

It should be understood that the communication system shown in FIG. 1 may further include more network nodes, for example, more terminal devices or network devices, which are not shown one by one in the figure in this embodiment of this application.

A CBR of a carrier can reflect, to some extent, a ratio of occupying a channel, sub-channel, or resource corresponding to the carrier. When the CBR is less than a specific threshold, it is considered that the channel, sub-channel, or resource corresponding to the carrier is used by a small quantity of nearby users. In this case, when data is transmitted via the carrier, interference is low, so that effectiveness of SL resource transmission can be ensured.

The system shown in FIG. 1 is used as an example. The terminal device 110 may transmit data to the terminal device 120 through a sidelink between the terminal device 110 and the terminal device 120. Before transmitting the data, the terminal device 110 first needs to determine a candidate carrier by measuring a CBR of a carrier, and then select, based on a CBR of the candidate carrier, an appropriate carrier to transmit the data.

Specifically, refer to FIG. 2. When performing sending to an access layer, an upper layer of a terminal device notifies the terminal device of a priority of the service data and a corresponding available carrier list. With reference to CBR carrier selection thresholds and CBR carrier keeping thresholds of carriers with different priorities, the terminal device may learn of the available carrier list for the to-be-sent service data and a CBR threshold corresponding to each carrier in the carrier list. As shown in FIG. 2, the available carrier list for the service data is {F1, F2, F3}. Because the priority of the service data sent by the terminal device is PPPP1, corresponding CBR carrier selection thresholds of F1, F2, and F3 are 0.6, 0.5, and 0.6 respectively. Further, CBR values that are of the carriers F1, F2, and F3 and that are obtained by the terminal device through measurement are 0.7, 0.4, and 0.3 respectively. F2 and F3 are candidate carriers because only the carriers F2 and F3 are less than the corresponding CBR carrier selection thresholds.

The foregoing solution may be applied to an SL broadcast service. In NR V2X, there is not only a broadcast service but also unicast and multicast services in SL transmission. Communication quality of a peer end needs to be ensured for the unicast and multicast services. In this case, if the candidate carrier selected by the terminal device 110 is not applicable to the terminal device 120, the terminal device 120 may fail in reception.

In view of this, this application provides a communication method. A candidate carrier is selected based on results of measuring a CBR of a carrier by two terminal devices that perform sidelink communication, so that it can be ensured as much as possible that the selected candidate carrier is applicable to both terminal devices. This helps ensure normal sidelink communication.

Before the method provided in this application is described, several points are first described.
1. That "there is no sidelink grant" (on) a carrier in this application means that there is no reserved resource on the carrier. Correspondingly, that "there is a sidelink grant" on a carrier means that there is a reserved resource on the carrier.
2. A carrier "that triggers carrier selection" in this application means that a location of a resource reserved on the carrier does not meet a delay requirement of data, or a resource reserved on the carrier cannot accommodate all to-be-transmitted data.
   Correspondingly, a carrier "that does not trigger carrier selection" means that a location of a resource reserved on the carrier meets a delay requirement of data, or a resource reserved on the carrier can accommodate all to-be-transmitted data.
3. A carrier that triggers carrier selection in this application may also be replaced with a carrier that triggers carrier reselection. Correspondingly, a carrier that does not trigger carrier selection may also be replaced with a carrier that does not trigger carrier reselection.

The following describes in detail the solutions provided in this application with reference to corresponding flowcharts. It may be understood that in the schematic flowcharts provided in this application, an example in which different terminal devices are used as execution bodies of the interaction illustration is mainly used to illustrate the method. However, the execution bodies of the interaction illustration are not limited in this application. For example, a terminal device (for example, a first terminal device or a second terminal device) in the schematic flowcharts may alternatively be a chip, a chip system, or a processor that supports the terminal device in implementing the method, or may be a logical module or software that can implement all or some functions of the terminal device.

It should be noted that in the method described below, a first terminal device (for example, the terminal device 110) is a data sender, and a second terminal device (for example, the terminal device 120) is a data receiver.

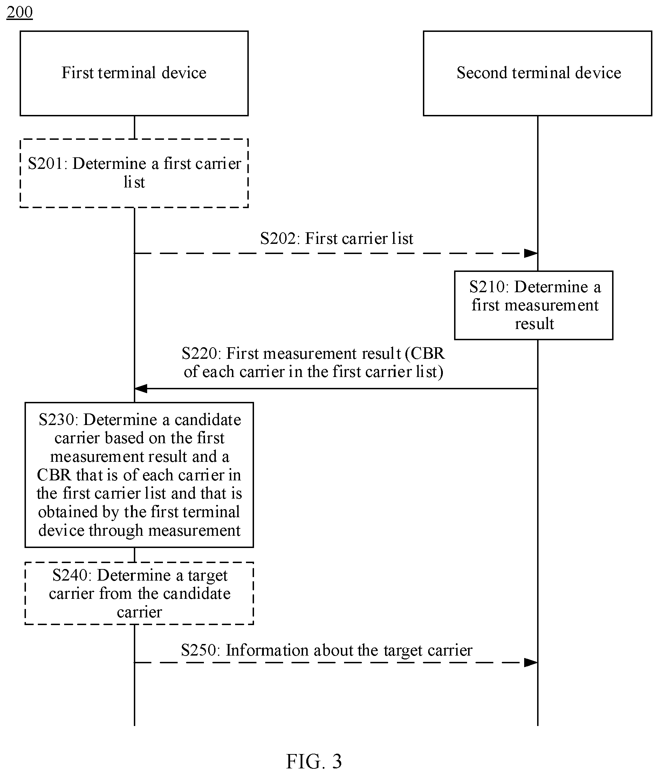

FIG. 3 is a schematic flowchart of a communication method according to this application. The method 200 may include S210 to S230. The following describes each step in detail.

S210: A second terminal device determines a first measurement result.

S220: The second terminal device sends the first measurement result to a first terminal device. Correspondingly, the first terminal device receives the first measurement result from the second terminal device.

The first measurement result includes a CBR that is of each carrier in a first carrier list and that is obtained by the second terminal device through measurement.

Specifically, the second terminal device may measure the CBR of each carrier in the first carrier list, and the second terminal device may feed back the CBR that is of each carrier in the first carrier list and that is obtained through measurement to the first terminal device.

In an example, the first carrier list may be a carrier list configured by an upper layer of the second terminal device, a carrier list supportable by a network, a carrier list supportable by the second terminal device, or an intersection set of any two or three of the foregoing lists.

For example, if a carrier in the carrier list configured by the upper layer of the second terminal device is a carrier that can be supported by the network and the second terminal device, the first carrier list may be the carrier list configured by the upper layer of the second terminal device.

For example, if a carrier in the carrier list supportable by the second terminal device is a carrier configured by the upper layer of the second terminal device, and is a carrier that can be supported by the network, the first carrier list may be the carrier list supportable by the second terminal device.

For example, if the carrier list configured by the upper layer of the second terminal device, the carrier list supportable by the network, and the carrier list supportable by the second terminal device are independent of each other, the first carrier list may be an intersection set of the three carrier lists. For example, if the carrier list configured by the upper layer of the second terminal device, the carrier list supportable by the network, and the carrier list supportable by the second terminal device are respectively {1, 2, 3, 4, 5, 6, 7, 8, 9}, {1, 3, 4, 6, 7, 8, 9}, and {1, 2, 3, 4, 5, 6, 7, 9}, the first carrier list may be {1, 3, 4, 6, 7, 9}.

For example, the carrier list configured by the upper layer of the second terminal device may be a carrier list that is configured by the upper layer of the second terminal device and that is related to a type of service data. It should be understood that the service data herein is data to be sent by the first terminal device to the second terminal device, that is, to-be-transmitted or to-be-sent data of the first terminal device.

For example, the carrier list supportable by the network may be a carrier list that can be supported by the network and that is notified by a network device to the second terminal device in a configuration message sent to the second terminal device or a carrier list from preconfigured information.

For example, the first carrier list may be preconfigured, or may be configured by the network device for the second terminal device.

For example, the first carrier list may be included in an SL preconfiguration message (for example, SL-PreconfigurationNR). Further, the first carrier list may be sl-FreqInfoToAddModList.

For example, the network device may send the first carrier list via a radio resource control (radio resource control, RRC) message. The RRC message may be an RRC reconfiguration message (RRCReconfiguration), and the RRC reconfiguration message may be sent after the network device receives a SecurityModeComplete message or after the network device sends SecurityModeCommand.

For example, the network device may send the first carrier list via a system information block (system information block, SIB) message (for example, SIB2).

In another example, the first carrier list is sent by the first terminal device to the second terminal device.

Specifically, before S210, the method may further include the following steps.

S201: The first terminal device determines the first carrier list.

S202: The first terminal device sends the first carrier list to the second terminal device. Correspondingly, the second terminal device receives the first carrier list from the first terminal device.

For example, the first terminal device sends an identifier of each carrier in the first carrier list to the second terminal device.

The first carrier list may be a carrier list configured by an upper layer of the first terminal device, a carrier list supportable by a network, a carrier list supportable by the first terminal device, or an intersection set of any two or three of the foregoing lists.

For example, if a carrier in the carrier list configured by the upper layer of the first terminal device is a carrier that can be supported by the network and the first terminal device, the first carrier list may be the carrier list configured by the upper layer of the first terminal device.

For example, if a carrier in the carrier list supportable by the first terminal device is a carrier configured by the upper layer of the first terminal device, and is a carrier that can be supported by the network, the first carrier list may be the carrier list supportable by the first terminal device.

For example, if the carrier list configured by the upper layer of the first terminal device, the carrier list supportable by the network, and the carrier list supportable by the first terminal device are independent of each other, the first carrier list may be an intersection set of the three carrier lists.

For example, the carrier list configured by the upper layer of the first terminal device may be a carrier list that is configured by the upper layer of the first terminal device and that is related to a type of service data. The type of the service data herein is a type of to-be-sent data (or referred to as service data).

For example, the carrier list supportable by the network may be a carrier list that can be supported by the network and that is notified by a network device to the first terminal device in a configuration message sent to the first terminal device or a carrier list from preconfigured information.

For example, the first carrier list may be preconfigured, or may be configured by the network device for the first terminal device.

For example, the first carrier list may be included in an SL preconfiguration message (for example, SL-PreconfigurationNR). Further, the first carrier list may be sl-FreqInfoToAddModList.

For example, the network device may send the first carrier list via an RRC message. The RRC message may be an RRC reconfiguration message (RRCReconfiguration), and the RRC reconfiguration message may be sent after the network device receives a SecurityModeComplete message or after the network device sends SecurityModeCommand.

For example, the network device may send the first carrier list via a SIB message (for example, SIB2).

Optionally, when the first terminal device needs to send data, or there is no SL grant on all carriers corresponding to a logical channel on which to-be-sent data is present, or a resource pool is reconfigured by the upper layer, execution of S201 may be triggered.

For example, in S202, the first carrier list may be sent via a PC5-RRC message or a sidelink control information (sidelink control information, SCI) message.

Optionally, the second terminal device may periodically perform S210 and S220.

The first terminal device may send a configuration message to the second terminal device, where the configuration message is used to configure the first carrier list and a feedback periodicity. The second terminal device periodically measures and feeds back the CBR of each carrier in the first carrier list based on a configuration from the first terminal device.

For example, in this manner, the first carrier list may be a carrier list that can be supported by both the first terminal device and the second terminal device and that is negotiated by the first terminal device and the second terminal device. Alternatively, the first carrier list may be a carrier list configured by an upper layer of the first terminal device, a carrier list supportable by a network, a carrier list supportable by the first terminal device, or an intersection set of any two or three of the foregoing lists.

S230: The first terminal device determines a candidate carrier based on the first measurement result and a second measurement result.

In some embodiments, the first terminal device may perform S230 when there is data to be sent.

One or more candidate carriers may be determined in step S230. In other words, a candidate carrier list is actually determined in step S230. The candidate carrier may be used by the first terminal device to send data to the second terminal device through an SL.

Specifically, the first terminal device may measure a CBR of each carrier in the first carrier list, and determine the candidate carrier with reference to the CBR that is of each carrier in the first carrier list and that is obtained by the first terminal device through measurement (that is, the second measurement result) and the CBR that is of each carrier in the first carrier list and that is obtained by the second terminal device through measurement.

In an example, for any carrier in the first carrier list, the carrier is determined as the candidate carrier when the carrier meets a condition 1.

The condition 1 is that a CBR that is of the carrier and that is obtained by the first terminal device through measurement is less than a first CBR carrier selection threshold corresponding to the carrier, and a CBR that is of the carrier and that is obtained by the second terminal device through measurement is less than a second CBR carrier selection threshold corresponding to the carrier.

Alternatively, the condition 1 is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier.

For example, the first carrier list is {1, 3, 4, 6, 7, 9}. If a CBR that is of the carrier #1 and that is obtained by the first terminal device through measurement is less than a first CBR carrier selection threshold corresponding to the carrier #1, a CBR that is of the carrier #1 and that is obtained by the second terminal device through measurement is less than a second CBR carrier selection threshold corresponding to the carrier #1, a CBR that is of the carrier #3 and that is obtained by the first terminal device through measurement is less than a first CBR carrier selection threshold corresponding to the carrier #3, and a CBR that is of the carrier #3 and that is obtained by the second terminal device through measurement is less than a second CBR carrier selection threshold corresponding to the carrier #3, the carrier #1 and the carrier #3 may be used as candidate carriers.

In another example, if there is no sidelink grant on all carriers in the first carrier list, for any carrier in the first carrier list, the carrier is determined as the candidate carrier when the carrier meets the condition 1.

In other words, if there is no sidelink grant on all the carriers in the first carrier list, the candidate carrier may be determined by using the solution described in the previous example.

In another example, if there is a sidelink grant on a part of or all carriers in the first carrier list, for any carrier that triggers carrier selection in the first carrier list, the carrier is determined as the candidate carrier when the carrier meets a condition 2, and for any carrier that does not trigger carrier selection in the first carrier list, the carrier is determined as the candidate carrier when the carrier meets the condition 1.

The condition 2 is that a CBR that is of the carrier and that is obtained by the first terminal device through measurement is less than a first CBR carrier keeping threshold corresponding to the carrier, and a CBR that is of the carrier and that is obtained by the second terminal device through measurement is less than a second CBR carrier keeping threshold corresponding to the carrier.

Alternatively, the condition 2 is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

For example, the first carrier list is {1, 3, 4, 6, 7, 9}. If the carrier #1 and the carrier #4 trigger carrier selection, the carrier #1 meets the condition 2, another carrier does not trigger carrier selection, and the carrier #6 meets the condition 1, the carrier #1 and the carrier #6 may be used as candidate carriers.

Optionally, for any carrier in the first carrier list, whether the carrier triggers carrier selection may be notified by the first terminal device to the second terminal device.

Optionally, for any carrier, a first CBR carrier selection threshold corresponding to the carrier may be equal to a second CBR carrier selection threshold corresponding to the carrier, and a first CBR carrier keeping threshold corresponding to the carrier may be equal to a second CBR carrier keeping threshold corresponding to the carrier.

Optionally, for any carrier, a first CBR carrier selection threshold corresponding to the carrier may be equal to a first CBR carrier keeping threshold corresponding to the carrier, and a second CBR carrier selection threshold corresponding to the carrier may be equal to a second CBR carrier keeping threshold corresponding to the carrier.

Optionally, the first terminal device may determine, based on a priority of to-be-transmitted data or a priority of a logical channel corresponding to the data, a first CBR carrier selection threshold and/or a first CBR carrier keeping threshold corresponding to each carrier in the first carrier list.

Specifically, there is a correspondence between a priority of data or a priority of a logical channel corresponding to the data, a carrier, and a first CBR carrier selection threshold and/or a first CBR carrier keeping threshold. After the priority is determined, for a carrier, a first CBR carrier selection threshold and/or a first CBR carrier keeping threshold corresponding to the carrier can be determined. For example, refer to FIG. 2. For a carrier F1, when the priority is PPPP2, a first CBR carrier selection threshold and/or a first CBR carrier keeping threshold corresponding to the carrier may be 0.6.

Optionally, for any carrier in the first carrier list, a second CBR carrier selection threshold and/or a second CBR carrier keeping threshold corresponding to the carrier may be notified by the first terminal device to the second terminal device. Alternatively, the first terminal device may send a priority of to-be-transmitted data or a priority of a logical channel corresponding to the data to the second terminal device, and the second terminal device may determine, based on the priority, a second CBR carrier selection threshold and/or a second CBR carrier keeping threshold corresponding to each carrier.

Further, if the second CBR carrier selection threshold and/or the second CBR carrier keeping threshold are/is determined by the second terminal device, the second terminal device may further send the second CBR carrier selection threshold and/or the second CBR carrier keeping threshold to the first terminal device. For example, the first measurement result may include the second CBR carrier selection threshold and/or the second CBR carrier keeping threshold.

In conclusion, according to the communication method provided in this application, the first terminal device may determine the candidate carrier with reference to the result of measuring the CBR of each carrier in the first carrier list by the first terminal device and the result of measuring the CBR of each carrier in the first carrier list by the second terminal device. In this way, it can be ensured as much as possible that the candidate carrier is applicable to both the first terminal device and the second terminal device. This helps ensure normal sidelink communication.

In some embodiments, the first terminal device may send data to the second terminal device by using some candidate carriers, for example, by using only one candidate carrier. In this embodiment, after the first terminal device determines the candidate carrier, the method may further include the following steps.

S240: The first terminal device determines a target carrier from the candidate carrier.

For example, the first terminal device may select the target carrier in ascending order of CBRs of candidate carriers.

For example, the first terminal device may select, from the candidate carriers, a carrier with a highest CBR obtained by the first terminal device through measurement as the target carrier.

S250: The first terminal device sends information about the target carrier to the second terminal device.

For example, the first terminal device may send an identifier of the target carrier to the second terminal device.

After both the first terminal device and the second terminal device learn of the target carrier, the first terminal device may select a resource from the target carrier to transmit to-be-sent data.

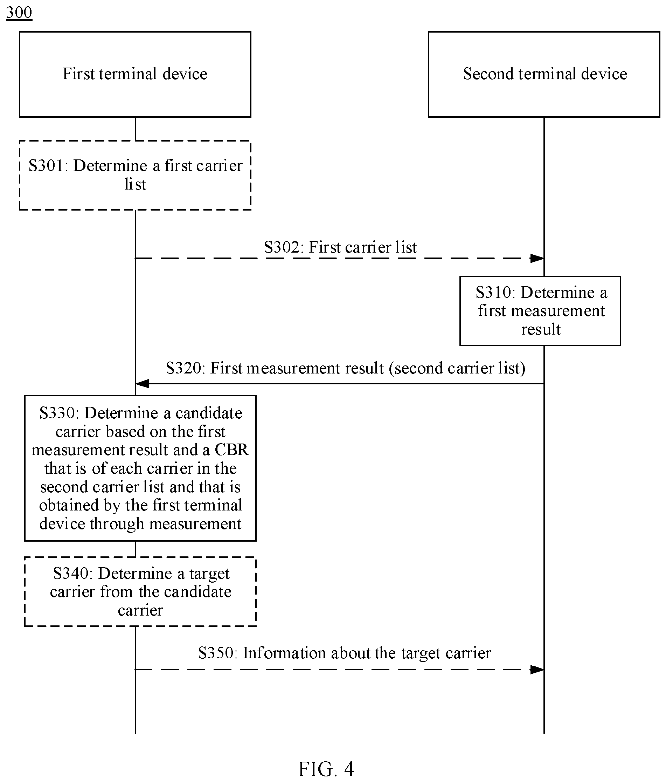

FIG. 4 is a schematic flowchart of a communication method according to this application. The method 300 may include S310 to S330. The following describes each step in detail.

S310: A second terminal device determines a first measurement result.

S320: The second terminal device sends the first measurement result to a first terminal device. Correspondingly, the first terminal device receives the first measurement result from the second terminal device.

The second terminal device may measure a CBR of each carrier in a first carrier list, and select at least one first carrier from the first carrier list based on the CBR that is of each carrier in the first carrier list and that is obtained through measurement. A carrier list including the at least one first carrier may be denoted as a second carrier list. The first measurement result may include the second carrier list. A CBR corresponding to the first carrier is less than a corresponding CBR threshold.

In an example, for any carrier in the first carrier list, the carrier is determined as the first carrier when the carrier meets a condition 3.

The condition 3 is that a CBR that is of the carrier and that is obtained by the second terminal device through measurement is less than a second CBR carrier selection threshold corresponding to the carrier.

For example, the first carrier list is {1, 3, 4, 6, 7, 9}. The CBR that is of each carrier in the first carrier list and that is obtained by the second terminal device through measurement and a second CBR carrier selection threshold corresponding to each carrier are shown in Table 1.

**Table 1**

| Carrier | CBR that is of the carrier and that is obtained by the second terminal device through measurement | Second CBR carrier selection threshold |
|---|---|---|
| 1 | 0.4 | 0.5 |
| 3 | 0.4 | 0.3 |
| 4 | 0.3 | 0.5 |
| 6 | 0.2 | 0.4 |
| 7 | 0.6 | 0.5 |
| 9 | 0.5 | 0.4 |

Refer to Table 1. CBRs of the carrier #1, the carrier #4, and the carrier #6 are all less than corresponding second CBR carrier selection thresholds, and CBRs of other carriers are all greater than corresponding second CBR carrier selection thresholds. Therefore, the carrier #1, the carrier #4, and the carrier #6 are first carriers, and correspondingly, the second carrier list is {1, 4, 6}.

In another example, if there is no sidelink grant on all carriers in the first carrier list, for any carrier in the first carrier list, the carrier is determined as the first carrier when the carrier meets the condition 3.

In other words, if there is no sidelink grant on all the carriers in the first carrier list, the first carrier or the second carrier list may be determined according to the method described in the previous example.

In another example, if there is a sidelink grant on a part of or all carriers in the first carrier list, for any carrier that triggers carrier selection in the first carrier list, the carrier is determined as the first carrier when the carrier meets a condition 4, and for any carrier that does not trigger carrier selection in the first carrier list, the carrier is determined as the first carrier when the carrier meets the condition 3.

The condition 4 is that a CBR that is of the carrier and that is obtained by the second terminal device through measurement is less than a second CBR carrier keeping threshold corresponding to the carrier.

For example, there is a sidelink grant on a part of or all carriers in the first carrier list, the first carrier list is {1, 3, 4, 6, 7, 9}, the carrier #1 and the carrier #4 trigger carrier selection, and another carrier does not trigger carrier selection. The CBR that is of each carrier in the first carrier list and that is obtained by the second terminal device through measurement and a second CBR carrier selection threshold and a second CBR carrier keeping threshold corresponding to each carrier are shown in Table 2.

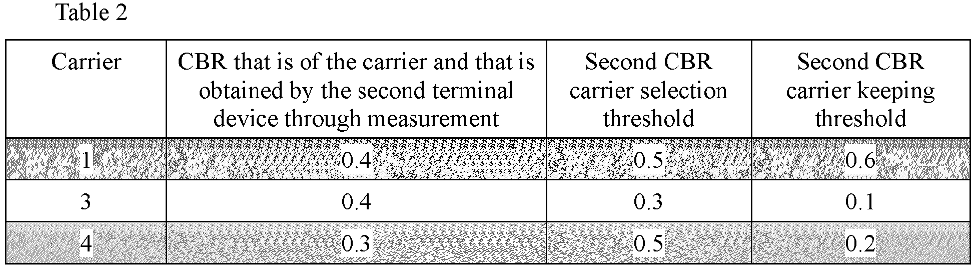

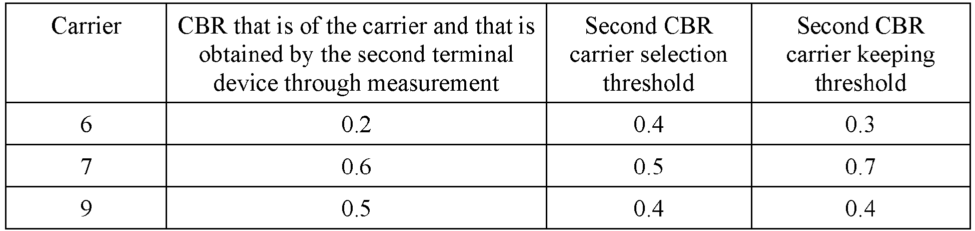

Refer to Table 2. A CBR of the carrier #1 is less than a corresponding second CBR carrier keeping threshold, and a CBR of the carrier #6 is less than a corresponding second CBR carrier selection threshold. Therefore, the carrier #1 and the carrier #6 are first carriers, and correspondingly, the second carrier list is {1, 6}.

Optionally, whether there is a sidelink grant on a carrier may be notified by the first terminal device to the second terminal device.

Optionally, for any carrier in the first carrier list, for how to determine whether the carrier triggers carrier selection, refer to the descriptions in the method 200.

Optionally, for how the second terminal device determines a second CBR carrier selection threshold and/or a second CBR carrier keeping threshold, refer to the descriptions in the method 200.

Optionally, for content of the first carrier list, refer to the descriptions in the method 200.

It should be understood that, in an example, the method 300 may further include S301 and S302. S301 and S302 are the same as S201 and S202. For details, refer to the descriptions of S201 and S202.

S330: The first terminal device determines a candidate carrier based on the first measurement result and a second measurement result.

One or more candidate carriers may be determined in step S330. In other words, a candidate carrier list is actually determined in step S330. The candidate carrier may be used by the first terminal device to send data to the second terminal device through an SL.

The first terminal device may measure a CBR of each carrier in the second carrier list, and determine the candidate carrier with reference to the CBR that is of each carrier in the second carrier list and that is obtained by the first terminal device through measurement (that is, the second measurement result) and the first measurement result.

In an example, for any carrier in the second carrier list, the carrier is determined as the candidate carrier when the carrier meets a condition 5.

The condition 5 is that a CBR that is of the carrier and that is obtained by the first terminal device through measurement is less than a first CBR carrier selection threshold corresponding to the carrier.

For example, the second carrier list is {1, 4, 6}. If the carrier #1 and the carrier #4 meet the condition 5, and the carrier #6 does not meet the condition 5, the carrier #1 and the carrier #4 may be used as candidate carriers.

In another example, if there is no sidelink grant on all carriers in the second carrier list, for any carrier in the second carrier list, the carrier is determined as the candidate carrier when the carrier meets the condition 5.

In another example, if there is a sidelink grant on a part of or all carriers in the second carrier list, for any carrier that triggers carrier selection in the second carrier list, the carrier is determined as the candidate carrier when the carrier meets a condition 6, and for any carrier that does not trigger carrier selection in the second carrier list, the carrier is determined as the candidate carrier when the carrier meets the condition 5.

The condition 6 is that a CBR that is of the carrier and that is obtained by the first terminal device through measurement is less than a first CBR carrier keeping threshold corresponding to the carrier.

For example, the second carrier list is {1, 4, 6}. If the carrier #1 and the carrier #4 trigger carrier selection, the carrier #1 meets the condition 6, another carrier does not trigger carrier selection, and the carrier #6 meets the condition 5, the carrier #1 and the carrier #6 may be used as candidate carriers.

Optionally, for any carrier, a first CBR carrier selection threshold corresponding to the carrier may be equal to a second CBR carrier selection threshold corresponding to the carrier, and a first CBR carrier keeping threshold corresponding to the carrier may be equal to a second CBR carrier keeping threshold corresponding to the carrier.

Optionally, the first terminal device may determine, based on a priority of to-be-transmitted data or a priority of a logical channel corresponding to the data, a first CBR carrier selection threshold and/or a first CBR carrier keeping threshold.

Optionally, if the second CBR carrier selection threshold and/or the second CBR carrier keeping threshold are/is determined by the second terminal device, the second terminal device may further send the second CBR carrier selection threshold and/or the second CBR carrier keeping threshold to the first terminal device. For example, the first measurement result may include the second CBR carrier selection threshold and/or the second CBR carrier keeping threshold.

In conclusion, according to the communication method provided in this application, the first terminal device may determine the candidate carrier based on a measurement result that is of the CBR of each carrier in the second carrier list and that is fed back by the second terminal device based on measurement on the CBR of the carrier. In this way, it can be ensured as much as possible that the candidate carrier is applicable to both the first terminal device and the second terminal device. This helps ensure normal sidelink communication.

In some embodiments, the method 300 may further include S340 and S350.

S340: The first terminal device determines a target carrier from the candidate carrier.

S350: The first terminal device sends information about the target carrier to the second terminal device.

After both the first terminal device and the second terminal device learn of the target carrier, the first terminal device may select a resource from the target carrier to transmit to-be-sent data.

For S340 and S350, refer to S240 and S250.

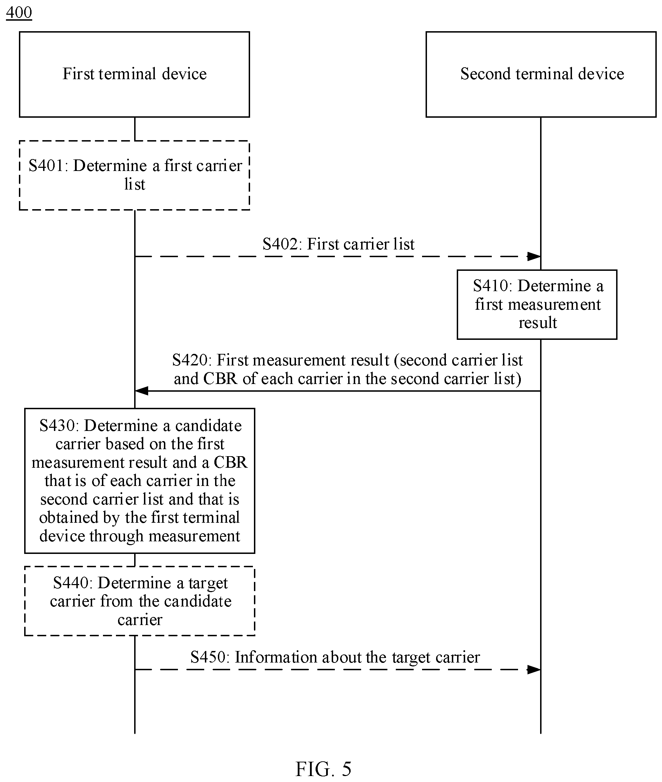

FIG. 5 is a schematic flowchart of a communication method according to this application. The method 400 may include S410 to S430. The following describes each step in detail.

S410: A second terminal device determines a first measurement result.

S420: The second terminal device sends the first measurement result to a first terminal device. Correspondingly, the first terminal device receives the first measurement result from the second terminal device.

The second terminal device may measure a CBR of each carrier in a first carrier list, and select at least one first carrier from the first carrier list based on the CBR that is of each carrier in the first carrier list and that is obtained through measurement. A carrier list including the at least one first carrier may be denoted as a second carrier list. The first measurement result may include the second carrier list and a CBR that is of each carrier in the second carrier list and that is obtained by the second terminal device through measurement. In other words, the first measurement result may include a CBR that is of each first carrier and that is obtained by the second terminal device through measurement. A CBR corresponding to the first carrier is less than a corresponding CBR threshold.

For how to determine the first carrier or the second carrier list, refer to the descriptions in the method 300.

Optionally, for any carrier in the first carrier list, for how to determine whether the carrier triggers carrier selection, refer to the descriptions in the method 200.

Optionally, for how the second terminal device determines a second CBR carrier selection threshold and/or a second CBR carrier keeping threshold, refer to the descriptions in the method 200.

Optionally, for content of the first carrier list, refer to the descriptions in the method 200.

It should be understood that, in an example, the method 400 may further include S401 and S402. S401 and S402 are the same as S201 and S202. For details, refer to the descriptions of S201 and S202.

S430: The first terminal device determines a candidate carrier based on the first measurement result and a second measurement result.

One or more candidate carriers may be determined in step S430. In other words, a candidate carrier list is actually determined in step S430. The candidate carrier may be used by the first terminal device to send data to the second terminal device through an SL.

The first terminal device may measure a CBR of each carrier in the second carrier list, and determine the candidate carrier with reference to the CBR that is of each carrier in the second carrier list and that is obtained by the first terminal device through measurement (that is, the second measurement result) and the first measurement result.

In an example, for any carrier in the second carrier list, the carrier is determined as the candidate carrier when the carrier meets a condition 7.

The condition 7 is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier.

In another example, if there is no sidelink grant on all carriers in the second carrier list, for any carrier in the second carrier list, the carrier is determined as the candidate carrier when the carrier meets the condition 7.

In another example, if there is a sidelink grant on a part of or all carriers in the second carrier list, for any carrier that triggers carrier selection in the second carrier list, the carrier is determined as the candidate carrier when the carrier meets a condition 8, and for any carrier that does not trigger carrier selection in the second carrier list, the carrier is determined as the candidate carrier when the carrier meets the condition 7.

The condition 8 is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

It should be understood that in step S430, the candidate carrier may also be determined by using the solution described in step S330 in the method 300.

Optionally, for any carrier, a first CBR carrier selection threshold corresponding to the carrier may be equal to a second CBR carrier selection threshold corresponding to the carrier, and a first CBR carrier keeping threshold corresponding to the carrier may be equal to a second CBR carrier keeping threshold corresponding to the carrier.

Optionally, the first terminal device may determine, based on a priority of to-be-transmitted data or a priority of a logical channel corresponding to the data, a first CBR carrier selection threshold and/or a first CBR carrier keeping threshold.

Optionally, if the second CBR carrier selection threshold and/or the second CBR carrier keeping threshold are/is determined by the second terminal device, the second terminal device may further send the second CBR carrier selection threshold and/or the second CBR carrier keeping threshold to the first terminal device. For example, the first measurement result may include the second CBR carrier selection threshold and/or the second CBR carrier keeping threshold.

In conclusion, according to the communication method provided in this application, the first terminal device may determine the candidate carrier with reference to the result of measuring the CBR of each carrier in the second carrier list by the second terminal device and the result of measuring the CBR of each carrier in the second carrier list by the second terminal device. In this way, it can be ensured as much as possible that the candidate carrier is applicable to both the first terminal device and the second terminal device. This helps ensure normal sidelink communication.

In some embodiments, the method 400 may further include S440 and S450.

S440: The first terminal device determines a target carrier from the candidate carrier.

S450: The first terminal device sends information about the target carrier to the second terminal device.

For S440 and S450, refer to S240 and S250, or refer to S340 and S350.

In all the communication methods described above, the first terminal device determines the candidate carrier. The following describes another communication method provided in this application. In the method, a second terminal device determines a candidate carrier, and notifies a first terminal device of information about the candidate carrier.

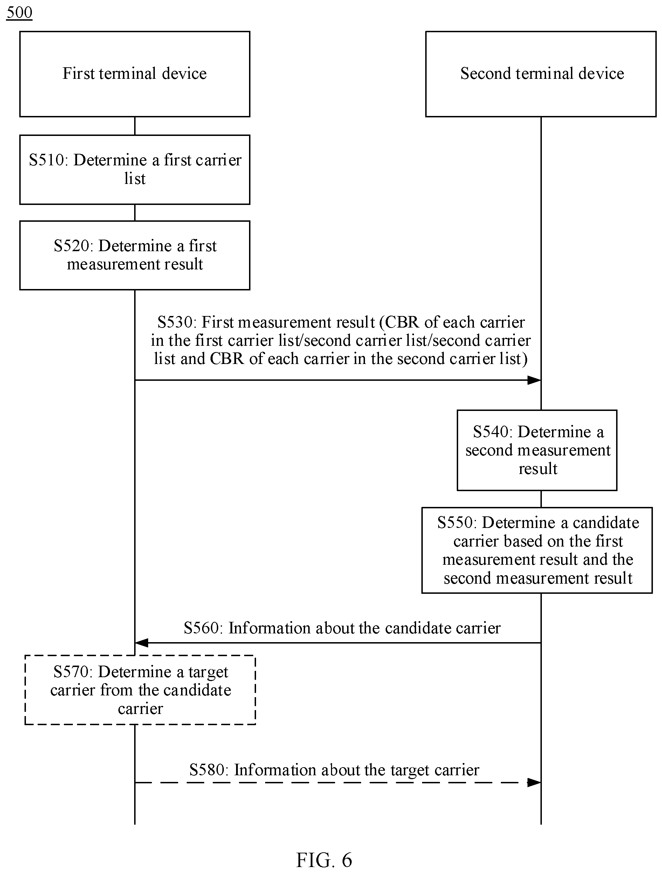

FIG. 6 is a schematic flowchart of another communication method according to this application. The method 500 may include S510 to S560. The following describes each step in detail.

S510: A first terminal device determines a first carrier list.

The first carrier list may be a carrier list configured by an upper layer of the first terminal device, a carrier list supportable by a network, a carrier list supportable by the first terminal device, or an intersection set of any two or three of the foregoing lists.

For example, if a carrier in the carrier list configured by the upper layer of the first terminal device is a carrier that can be supported by the network and the first terminal device, the first carrier list may be the carrier list configured by the upper layer of the first terminal device.

For example, if a carrier in the carrier list supportable by the first terminal device is a carrier configured by the upper layer of the first terminal device, and is a carrier that can be supported by the network, the first carrier list may be the carrier list supportable by the first terminal device.

For example, if the carrier list configured by the upper layer of the first terminal device, the carrier list supportable by the network, and the carrier list supportable by the first terminal device are independent of each other, the first carrier list may be an intersection set of the three carrier lists.

For example, the carrier list configured by the upper layer of the first terminal device may be a carrier list that is configured by the upper layer of the first terminal device and that is related to a type of service data. The type of the service data herein is a type of to-be-sent data (or referred to as service data).

For example, the carrier list supportable by the network may be a carrier list that can be supported by the network and that is notified by a network device to the first terminal device in a configuration message sent to the first terminal device or a carrier list from preconfigured information.

For example, the first carrier list may be preconfigured, or may be configured by the network device for the first terminal device.

For example, the first carrier list may be included in an SL preconfiguration message (for example, SL-PreconfigurationNR). Further, the first carrier list may be sl-FreqInfoToAddModList.

For example, the network device may send the first carrier list via an RRC message. The RRC message may be an RRC reconfiguration message (RRCReconfiguration), and the RRC reconfiguration message may be sent after the network device receives a SecurityModeComplete message or after the network device sends SecurityModeCommand.

For example, the network device may send the first carrier list via a SIB message (for example, SIB2).

For example, when there is no SL grant on all carriers corresponding to a logical channel on which to-be-sent data is present, or a resource pool is reconfigured by the upper layer, execution of S510 may be triggered.

S520: The first terminal device determines a first measurement result.

In a first implementation, the first terminal device may measure a CBR of each carrier in the first carrier list, and the CBR that is of each carrier in the first carrier list and that is obtained by the first terminal device through measurement may be used as the first measurement result.

In a second implementation, the first terminal device may measure a CBR of each carrier in the first carrier list, and select at least one first carrier from the first carrier list based on the CBR that is of each carrier in the first carrier list and that is obtained through measurement. A carrier list including the at least one first carrier may be denoted as a second carrier list. The first measurement result may include the second carrier list. Optionally, the first measurement result may further include a CBR that is of each carrier in the second carrier list and that is obtained by the first terminal device through measurement. In other words, the first measurement result may further include a CBR that is of each first carrier and that is obtained by the first terminal device through measurement. A CBR corresponding to the first carrier is less than a corresponding CBR threshold.

In an example, for any carrier in the first carrier list, the carrier is determined as the first carrier when the carrier meets a condition 1.

The condition 1 is that a CBR that is of the carrier and that is obtained by the first terminal device through measurement is less than a first CBR carrier selection threshold corresponding to the carrier.

For example, the first carrier list is {1, 2, 3, 5, 7, 9}. The CBR that is of each carrier in the first carrier list and that is obtained by the first terminal device through measurement and a first CBR carrier selection threshold corresponding to each carrier are shown in Table 3.

**Table 3**

| Carrier | CBR that is of the carrier and that is obtained by the first terminal device through measurement | First CBR carrier selection threshold |
|---|---|---|
| 1 | 0.3 | 0.5 |
| 2 | 0.2 | 0.3 |
| 3 | 0.6 | 0.5 |
| 5 | 0.2 | 0.4 |
| 7 | 0.6 | 0.5 |
| 9 | 0.5 | 0.4 |

Refer to Table 3. CBRs of the carrier #1, the carrier #2, and the carrier #5 are all less than corresponding first CBR carrier selection thresholds, and CBRs of other carriers are all greater than corresponding first CBR carrier selection thresholds. Therefore, the carrier #1, the carrier #2, and the carrier #5 are first carriers, and correspondingly, the second carrier list is {1, 2, 5}.

In another example, if there is no sidelink grant on all carriers in the first carrier list, for any carrier in the first carrier list, the carrier is determined as the first carrier when the carrier meets the condition 1.

In other words, if there is no sidelink grant on all the carriers in the first carrier list, the first carrier or the second carrier list may be determined according to the method described in the previous example.

In another example, if there is a sidelink grant on a part of or all carriers in the first carrier list, for any carrier that triggers carrier selection in the first carrier list, the carrier is determined as the first carrier when the carrier meets a condition 2, and for any carrier that does not trigger carrier selection in the first carrier list, the carrier is determined as the first carrier when the carrier meets the condition 1.

The condition 2 is that a CBR that is of the carrier and that is obtained by the first terminal device through measurement is less than a first CBR carrier keeping threshold corresponding to the carrier.

For example, there is a sidelink grant on a part of or all carriers in the first carrier list, the first carrier list is {1, 2, 3, 5, 7, 9}, the carrier #1 and the carrier #3 trigger carrier selection, and another carrier does not trigger carrier selection. The CBR that is of each carrier in the first carrier list and that is obtained by the first terminal device through measurement and a first CBR carrier selection threshold and a first CBR carrier keeping threshold corresponding to each carrier are shown in Table 4.

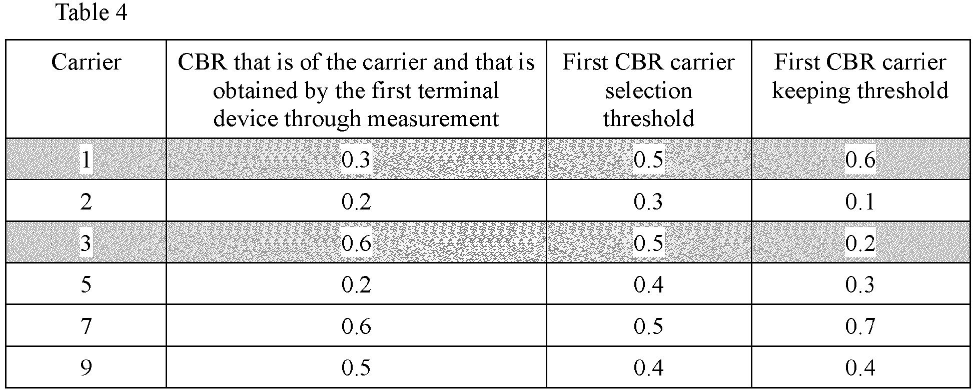

Refer to Table 4. A CBR of the carrier #1 is less than a corresponding first CBR carrier keeping threshold, and a CBR of the carrier #7 is less than a corresponding first CBR carrier selection threshold. Therefore, the carrier #1 and the carrier #7 are first carriers, and correspondingly, the second carrier list is {1, 7}.

Optionally, the first terminal device may determine, based on a priority of to-be-transmitted data or a priority of a logical channel corresponding to the data, a first CBR carrier selection threshold and/or a first CBR carrier keeping threshold corresponding to each carrier.

S530: The first terminal device sends the first measurement result to a second terminal device. Correspondingly, the second terminal device receives the first measurement result from the first terminal device.

S540: The second terminal device determines a second measurement result.

Corresponding to the first implementation in S520, the second terminal device may measure a CBR of each carrier in the first carrier list, and the CBR that is of each carrier in the first carrier list and that is obtained by the second terminal device through measurement is the second measurement result.

Corresponding to the second implementation in S520, the second terminal device may measure a CBR of each carrier in the second carrier list, and the CBR that is of each carrier in the second carrier list and that is obtained by the second terminal device through measurement is the second measurement result.

S550: The second terminal device determines a candidate carrier based on the first measurement result and the second measurement result.

Corresponding to the first implementation in S520 and S540, the second terminal device may determine the candidate carrier based on the CBRs that are of each carrier in the first carrier list and that are separately obtained by the second terminal device and the first terminal device through measurement.

In an example, for any carrier in the first carrier list, the carrier is determined as the candidate carrier when the carrier meets a condition 3.

The condition 3 is that a CBR that is of the carrier and that is obtained by the first terminal device through measurement is less than a first CBR carrier selection threshold corresponding to the carrier, and a CBR that is of the carrier and that is obtained by the second terminal device through measurement is less than a second CBR carrier selection threshold corresponding to the carrier.

Alternatively, the condition 3 is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier.

For example, the first carrier list is {1, 2, 3, 5, 7, 9}. If the carrier #1 and the carrier #2 meet the condition 3, and another carrier does not meet the condition 3, the carrier #1 and the carrier #2 may be used as candidate carriers.

In another example, if there is no sidelink grant on all carriers in the first carrier list, for any carrier in the first carrier list, the carrier is determined as the candidate carrier when the carrier meets the condition 3.

In another example, if there is a sidelink grant on a part of or all carriers in the first carrier list, for any carrier that triggers carrier selection in the first carrier list, the carrier is determined as the candidate carrier when the carrier meets a condition 4, and for any carrier that does not trigger carrier selection in the first carrier list, the carrier is determined as the candidate carrier when the carrier meets the condition 3.

The condition 4 is that a CBR that is of the carrier and that is obtained by the first terminal device through measurement is less than a first CBR carrier keeping threshold corresponding to the carrier, and a CBR that is of the carrier and that is obtained by the second terminal device through measurement is less than a second CBR carrier keeping threshold corresponding to the carrier.

Alternatively, the condition 4 is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

For example, the first carrier list is {1, 2, 3, 5, 7, 9}. If the carrier #1 and the carrier #4 trigger carrier selection, the carrier #1 meets the condition 4, another carrier does not trigger carrier selection, and the carrier #7 meets the condition 3, the carrier #1 and the carrier #7 may be used as candidate carriers.

Corresponding to the second implementation in S520 and S540, the second terminal device may determine the candidate carrier based on the CBR that is of each carrier in the second carrier list and that is obtained by the second terminal device through measurement. Alternatively, the second terminal device may determine the candidate carrier based on the CBRs that are of each carrier in the second carrier list and that are separately obtained by the second terminal device and the first terminal device through measurement.

Case 1: The first measurement result includes the second carrier list, but does not include the CBR of each carrier in the second carrier list.

In an example, for any carrier in the second carrier list, the carrier is determined as the candidate carrier when the carrier meets a condition 5.

The condition 5 is that a CBR that is of the carrier and that is obtained by the second terminal device through measurement is less than a second CBR carrier selection threshold corresponding to the carrier.

For example, the second carrier list is {1, 2, 5}. If the carrier #1 and the carrier #2 meet the condition 5, and the carrier #5 does not meet the condition 5, the carrier #1 and the carrier #2 may be used as candidate carriers.

In another example, if there is no sidelink grant on all carriers in the second carrier list, for any carrier in the second carrier list, the carrier is determined as the candidate carrier when the carrier meets the condition 5.

In another example, if there is a sidelink grant on a part of or all carriers in the second carrier list, for any carrier that triggers carrier selection in the second carrier list, the carrier is determined as the candidate carrier when the carrier meets a condition 6, and for any carrier that does not trigger carrier selection in the second carrier list, the carrier is determined as the candidate carrier when the carrier meets the condition 5.

The condition 6 is that a CBR that is of the carrier and that is obtained by the second terminal device through measurement is less than a first CBR carrier keeping threshold corresponding to the carrier.

For example, the second carrier list is {1, 7}. If the carrier #1 triggers carrier selection, the carrier #1 meets the condition 6, another carrier does not trigger carrier selection, and the carrier #7 does not meet the condition 5, the carrier #1 may be used as a candidate carrier.

Case 2: The first measurement result includes the second carrier list, and includes the CBR of each carrier in the second carrier list.

In an example, for any carrier in the second carrier list, the carrier is determined as the candidate carrier when the carrier meets a condition 7.

The condition 7 is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier.

In another example, if there is no sidelink grant on all carriers in the second carrier list, for any carrier in the second carrier list, the carrier is determined as the candidate carrier when the carrier meets the condition 7.

In another example, if there is a sidelink grant on a part of or all carriers in the second carrier list, for any carrier that triggers carrier selection in the second carrier list, the carrier is determined as the candidate carrier when the carrier meets a condition 8, and for any carrier that does not trigger carrier selection in the second carrier list, the carrier is determined as the candidate carrier when the carrier meets the condition 7.

The condition 8 is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

It should be understood that, in case 2, the candidate carrier may also be determined by using the solution described for case 1.

Optionally, for any carrier, a first CBR carrier selection threshold corresponding to the carrier may be equal to a second CBR carrier selection threshold corresponding to the carrier, and a first CBR carrier keeping threshold corresponding to the carrier may be equal to a second CBR carrier keeping threshold corresponding to the carrier.

Optionally, the second terminal device may determine, based on a priority of to-be-transmitted data or a priority of a logical channel corresponding to the data, a second CBR carrier selection threshold and/or a second CBR carrier keeping threshold. The priority of the to-be-transmitted data or the priority of the logical channel corresponding to the data may be sent by the first terminal device to the second terminal device. For example, the first measurement result may include the priority of the to-be-transmitted data or the priority of the logical channel corresponding to the data.

Optionally, the first terminal device may send the first CBR carrier selection threshold and/or the first CBR carrier keeping threshold to the second terminal device. For example, the first measurement result may include the first CBR carrier selection threshold and/or the first CBR carrier keeping threshold.

S560: The second terminal device sends information about the candidate carrier to the first terminal device. Correspondingly, the first terminal device receives the information about the candidate carrier from the second terminal device.

In conclusion, according to the communication method provided in this application, the second terminal device may determine the candidate carrier with reference to the result of measuring the CBR of the carrier by the second terminal device and the result of measuring the CBR of the carrier by the first terminal device, and notify the first terminal device of the information about the candidate carrier. In this way, it can be ensured as much as possible that the candidate carrier is applicable to both the first terminal device and the second terminal device. This helps ensure normal sidelink communication.

In some embodiments, the first terminal device may send data to the second terminal device by using some candidate carriers, for example, by using only one candidate carrier. In this embodiment, after the first terminal device receives the information about the candidate carrier from the second terminal device, the method may further include the following steps.

S570: The first terminal device determines a target carrier from the candidate carrier.

For example, the first terminal device may select the target carrier in ascending order of CBRs of candidate carriers.

For example, the first terminal device may select, from the candidate carriers, a carrier with a highest CBR obtained by the first terminal device through measurement as the target carrier.

S580: The first terminal device sends information about the target carrier to the second terminal device.

For example, the first terminal device may send an identifier of the target carrier to the second terminal device.

After both the first terminal device and the second terminal device learn of the target carrier, the first terminal device may select a resource from the target carrier to transmit to-be-sent data.

The methods described above relate to a concept of a CBR of a carrier. The following uses examples to describe how to determine a CBR of a carrier.

Example 1: Each carrier may be associated with one candidate resource pool, and a CBR of the candidate resource pool is used as a CBR of the carrier associated with the candidate resource pool.

For example, in the method 200, if the first carrier list is determined by the first terminal device, the first terminal device may determine a candidate resource pool associated with each carrier in the first carrier list, or the network device may configure, for the first terminal device, a candidate resource pool associated with each carrier in the first carrier list. In addition, the first terminal device may notify the second terminal device of the candidate resource pool associated with each carrier in the first carrier list. If the first carrier list is determined by the second terminal device, the second terminal device may determine a candidate resource pool associated with each carrier in the first carrier list, or the network device may configure, for the second terminal device, a candidate resource pool associated with each carrier in the first carrier list. In addition, the second terminal device may notify the first terminal device of the candidate resource pool associated with each carrier in the first carrier list.

Example 2: The first terminal device or the second terminal device uses a largest or smallest CBR of a resource pool on a carrier as a CBR of the carrier to which the resource pool belongs.

Example 3: The first terminal device or the second terminal device uses an average value of first N larger or smaller CBRs of resource pools on a carrier as a CBR of the carrier to which the resource pools belong.

Example 4: A CBR of a carrier is determined by a ratio of sub-channels (sub-channel) that meet an RSSI threshold in all resource pools on the carrier. For example, a ratio of sub-channels that meet an RSSI threshold in all resource pools on a carrier may be used as a CBR of the carrier. It should be understood that one resource pool includes L consecutive sub-channels in frequency domain.

For example, it is assumed that resource pools on a carrier 1 are a resource pool 1, a resource pool 2, and a resource pool 3, and the resource pool 1, the resource pool 2, and the resource pool 3 respectively include three, four, and six sub-channels in frequency domain. If one of the three sub-channels in the resource pool 1 is greater than a received signal strength indicator (received signal strength indicator, RSSI) threshold, two of the four sub-channels in the resource pool 2 are greater than the RSSI threshold, and none of the six sub-channels in the resource pool 3 is greater than the RSSI threshold, a ratio of sub-channels that meet the RSSI threshold in all the resource pools on the carrier 1 is 0.83 (that is, 0.33 + 0.5). In this case, a CBR of the carrier 1 is 0.83.

Example 5: A CBR of a carrier is calculated through weighted averaging on CBRs of resource pools on the carrier.

For example, a weight of a CBR of any resource pool may be determined in the following two manners.
(1) The weight is determined based on a ratio of a quantity of sub-channels in the resource pool to a total quantity of sub-channels in all resource pools on the carrier.
   For example, there are two resource pools on a carrier, that is, a resource pool 1 and a resource pool 2. The resource pool 1 has two sub-channels, and the resource pool 2 has three sub-channels. In this case, a weight of a CBR of the resource pool 1 is 0.4, a weight of a CBR of the resource pool 1 is 0.6, and a CBR of the carrier = (the CBR of the resource pool 1 * 0.4 + the CBR of the resource pool 2 * 0.6)/2.
(2) The weight is determined based on a ratio of a quantity of RBs in the resource pool to a quantity of RBs in all resource pools on the carrier. Example 6: A CBR measurement manner at a carrier granularity is defined. The network device separately provides a set of parameters used to measure a CBR at a carrier granularity. A basic principle is also to calculate a ratio of a quantity of sub-channels that exceed a specific threshold to a quantity of all configured sub-channels. The parameters may include the following.
   (1) Measurement threshold: If a measured RSSI of a sub-channel exceeds a (preconfigured) threshold, it is considered that the sub-channel is occupied. The measurement threshold herein is an RSSI threshold, and other measurement values, such as RSRP and RSRQ, may be considered.
   (2) In time domain, a CBR in a slot (slot) n may be obtained by measuring a CBR in a sensing measurement window slot [n-a, n-1], where a = 100 or 100 * 2^µ. Optionally, a is any integer.
   (3) In frequency domain, a start RB location of a sub-channel is a start RB location of a carrier, and a band of the entire carrier is covered. Coverage means that sub-channels should be distributed at all locations in a spectrum bandwidth of the carrier. Sub-channels for measuring a CBR of the carrier are consecutive or spaced in frequency domain, and a spacing may be set to N sub-channels or N RBs. A value of N is a small integer.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the foregoing method embodiments. For brevity, details are not described herein again.

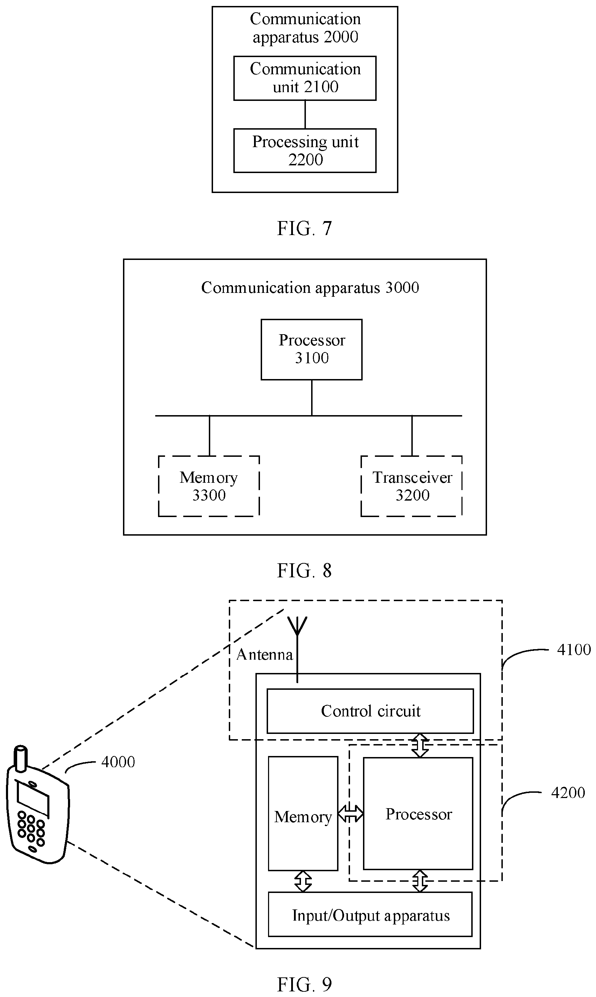

FIG. 7 is a block diagram of a communication apparatus according to an embodiment of this application. As shown in FIG. 7, the communication apparatus 2000 may include a communication unit 2100 and a processing unit 2200. The communication unit 2100 may implement a corresponding communication function. The communication may be internal communication of the communication apparatus 2000, or may be communication between the communication apparatus 2000 and another apparatus, for example, receiving or sending a measurement result. The processing unit 2200 may implement a corresponding processing function, for example, measuring a CBR of a carrier or determining a candidate carrier. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, so that the apparatus implements the foregoing method embodiments.

In a possible design, the communication apparatus 2000 may be the first terminal device in any one of the foregoing method embodiments, or may be a module or a chip used in the first terminal device. The communication apparatus 2000 may be configured to perform steps or procedures performed by the first terminal device in any one of the foregoing method embodiments.

For example, in an implementation, the communication apparatus 2000 may be corresponding to the first terminal device in the method 200, the method 300, or the method 400, and may perform steps or procedures performed by the first terminal device in the method 200, the method 300, or the method 400.

Specifically, the communication unit 2100 is configured to receive a first measurement result from a second terminal device, where the first measurement result includes a channel busy ratio CBR that is of each carrier in a first carrier list and that is obtained by the second terminal device through measurement, or the first measurement result includes a second carrier list, the second carrier list includes at least one first carrier in the first carrier list, and a CBR that is of the first carrier and that is obtained by the second terminal device through measurement is less than a corresponding CBR threshold. The processing unit 2200 is configured to determine a candidate carrier based on the first measurement result and a second measurement result, where the second measurement result includes a CBR that is of each carrier in the first carrier list and that is obtained by the communication apparatus 2000 through measurement, or the second measurement result includes a CBR that is of each carrier in the second carrier list and that is obtained by the communication apparatus 2000 through measurement, and the candidate carrier is used to send data through a sidelink between the communication apparatus 2000 and the second terminal device.

Optionally, the first carrier list is a carrier list configured by an upper layer of the communication apparatus 2000, a carrier list supportable by a network, a carrier list supportable by the communication apparatus 2000, or an intersection set of any two or three of the foregoing lists. The processing unit 2200 is further configured to determine the first carrier list. The communication unit 2100 is further configured to send the first carrier list to the second terminal device.

Optionally, the first carrier list is a carrier list supported by both the communication apparatus 2000 and the second terminal device. The communication unit 2100 is further configured to send a configuration message to the second terminal device, where the configuration message includes the first carrier list and a feedback periodicity, and the configuration message is used by the second terminal device to periodically feed back the CBR of each carrier in the first carrier list based on the feedback periodicity. The communication unit 2100 is specifically configured to receive the first measurement result fed back by the second terminal device based on the feedback periodicity.

Optionally, the first carrier list is a carrier list configured by an upper layer of the second terminal device, a carrier list supportable by a network, a carrier list supportable by the second terminal device, or an intersection set of any two or three of the foregoing lists.

Optionally, the first measurement result includes the CBR that is of each carrier in the first carrier list and that is obtained by the second terminal device through measurement. The processing unit 2200 is specifically configured to: for any carrier in the first carrier list, determine the carrier as the candidate carrier when the carrier meets a first condition; or if there is no sidelink grant on all carriers in the first carrier list, for any carrier in the first carrier list, determine the carrier as the candidate carrier when the carrier meets the first condition; or if there is a sidelink grant on a part of or all carriers in the first carrier list, for any carrier that triggers carrier selection in the first carrier list, determine the carrier as the candidate carrier when the carrier meets a second condition, and for any carrier that does not trigger carrier selection in the first carrier list, determine the carrier as the candidate carrier when the carrier meets the first condition. The first condition is that a CBR that is of the carrier and that is obtained by the communication apparatus 2000 through measurement is less than a first CBR carrier selection threshold corresponding to the carrier, and a CBR that is of the carrier and that is obtained by the second terminal device through measurement is less than a second CBR carrier selection threshold corresponding to the carrier, or the first condition is that an average value of a CBR that is of the carrier and that is obtained by the communication apparatus 2000 through measurement and a CBR that is of the carrier and that is obtained by the second terminal device through measurement is less than a first CBR carrier selection threshold corresponding to the carrier or a second CBR carrier selection threshold corresponding to the carrier. The second condition is that a CBR that is of the carrier and that is obtained by the communication apparatus 2000 through measurement is less than a first CBR carrier keeping threshold corresponding to the carrier, and a CBR that is of the carrier and that is obtained by the second terminal device through measurement is less than a second CBR carrier keeping threshold corresponding to the carrier, or the second condition is that an average value of a CBR that is of the carrier and that is obtained by the communication apparatus 2000 through measurement and a CBR that is of the carrier and that is obtained by the second terminal device through measurement is less than a first CBR carrier keeping threshold corresponding to the carrier or a second CBR carrier keeping threshold corresponding to the carrier.

Optionally, the first measurement result includes the second carrier list. The processing unit 2200 is specifically configured to: for any carrier in the second carrier list, determine the carrier as the candidate carrier when the carrier meets a first condition; or if there is no sidelink grant on all carriers in the second carrier list, for any carrier in the second carrier list, determine the carrier as the candidate carrier when the carrier meets the first condition; or if there is a sidelink grant on a part of or all carriers in the second carrier list, for any carrier that triggers carrier selection in the second carrier list, determine the carrier as the candidate carrier when the carrier meets a second condition, and for any carrier that does not trigger carrier selection in the second carrier list, determine the carrier as the candidate carrier when the carrier meets the first condition. The first condition is that a CBR that is of the carrier and that is obtained by the communication apparatus 2000 through measurement is less than a first CBR carrier selection threshold corresponding to the carrier; and the second condition is that a CBR that is of the carrier and that is obtained by the communication apparatus 2000 through measurement is less than a first CBR carrier keeping threshold corresponding to the carrier.

Optionally, the first measurement result further includes a CBR of each carrier in the second carrier list.

Optionally, the processing unit 2200 is specifically configured to: for any carrier in the second carrier list, determine the carrier as the candidate carrier when the carrier meets a first condition; or if there is no sidelink grant on all carriers in the second carrier list, for any carrier in the second carrier list, determine the carrier as the candidate carrier when the carrier meets the first condition; or if there is a sidelink grant on a part of or all carriers in the second carrier list, for any carrier that triggers carrier selection in the second carrier list, determine the carrier as the candidate carrier when the carrier meets a second condition, and for any carrier that does not trigger carrier selection in the second carrier list, determine the carrier as the candidate carrier when the carrier meets the first condition. The first condition is that an average value of a CBR that is of the carrier and that is obtained by the communication apparatus 2000 through measurement and a CBR that is of the carrier and that is obtained by the second terminal device through measurement is less than a first CBR carrier selection threshold corresponding to the carrier or a second CBR carrier selection threshold corresponding to the carrier. The second condition is that an average value of a CBR that is of the carrier and that is obtained by the communication apparatus 2000 through measurement and a CBR that is of the carrier and that is obtained by the second terminal device through measurement is less than a first CBR carrier keeping threshold corresponding to the carrier or a second CBR carrier keeping threshold corresponding to the carrier.

Optionally, the first measurement result further includes the second CBR carrier selection threshold and/or the second CBR carrier keeping threshold.

Optionally, the communication unit 2100 is further configured to send a priority of the data or a priority of a logical channel corresponding to the data to the second terminal device, where the priority of the data or the priority of the logical channel corresponding to the data is used by the second terminal device to determine the second CBR carrier selection threshold and/or the second CBR carrier keeping threshold.

Optionally, the communication unit 2100 is further configured to send the second CBR carrier selection threshold and/or the second CBR carrier keeping threshold to the second terminal device.

In another implementation, the communication apparatus 2000 may be corresponding to the first terminal device in the method 500, and may perform steps or procedures performed by the first terminal device in the method 500.

Specifically, the processing unit 2200 is configured to measure a CBR of each carrier in a first carrier list, where the first carrier list is a carrier list configured by an upper layer of the communication apparatus 2000, a carrier list supportable by a network, a carrier list supportable by the communication apparatus 2000, or an intersection set of any two or three of the foregoing lists. The communication unit 2100 is configured to send a first measurement result to a second terminal device, where the first measurement result includes the CBR of each carrier in the first carrier list, or the first measurement result includes a second carrier list, the second carrier list includes at least one first carrier in the first carrier list, and a CBR that is of the first carrier and that is obtained by the communication apparatus 2000 through measurement is less than a corresponding CBR threshold. The communication unit 2100 is further configured to receive information about a candidate carrier from the second terminal device, where the candidate carrier is obtained by the second terminal device based on the first measurement result and measurement performed by the second terminal device on a CBR of each carrier in the first carrier list or the second carrier list, and the candidate carrier is used to send data through a sidelink between the communication apparatus 2000 and the second terminal device.

Optionally, the processing unit 2200 is further configured to: for any carrier in the first carrier list, determine the carrier as the first carrier when the carrier meets a first condition; or if there is no sidelink grant on all carriers in the first carrier list, for any carrier in the first carrier list, determine the carrier as the first carrier when the carrier meets the first condition; or if there is a sidelink grant on a part of or all carriers in the first carrier list, for any carrier that triggers carrier selection in the first carrier list, determine the carrier as the first carrier when the carrier meets a second condition, and for any carrier that does not trigger carrier selection in the first carrier list, determine the carrier as the first carrier when the carrier meets the first condition. The first condition is that a CBR that is of the carrier and that is obtained by the communication apparatus 2000 through measurement is less than a first CBR carrier selection threshold corresponding to the carrier; and the second condition is that a CBR that is of the carrier and that is obtained by the communication apparatus 2000 through measurement is less than a first CBR carrier keeping threshold corresponding to the carrier.

Optionally, the first measurement result further includes a CBR of each carrier in the second carrier list.

Optionally, the first measurement result further includes one or more of the following threshold information: the first CBR carrier selection threshold, the first CBR carrier keeping threshold, a second CBR carrier selection threshold, or a second CBR carrier keeping threshold, and the threshold information is used by the second terminal device to determine the candidate carrier.

Optionally, the first measurement result further includes a priority of the data or a priority of a logical channel corresponding to the data, the priority of the data or the priority of the logical channel corresponding to the data is used by the second terminal device to determine a second CBR carrier selection threshold and/or a second CBR carrier keeping threshold, and the second CBR carrier selection threshold and/or the second CBR carrier keeping threshold are/is used by the second terminal device to determine the candidate carrier.

In another possible design, the communication apparatus 2000 may be the second terminal device in any one of the foregoing method embodiments, or may be a module or a chip used in the second terminal device. The communication apparatus 2000 may be configured to perform steps or procedures performed by the second terminal device in any one of the foregoing method embodiments.

For example, in an implementation, the communication apparatus 2000 may be corresponding to the second terminal device in the method 200, the method 300, or the method 400, and may perform steps or procedures performed by the second terminal device in the method 200, the method 300, or the method 400.

Specifically, the processing unit 2200 is configured to determine a first measurement result, where the first measurement result includes a channel busy ratio CBR that is of each carrier in a first carrier list and that is obtained by the communication apparatus 2000 through measurement, or the first measurement result includes a second carrier list, the second carrier list includes at least one first carrier in the first carrier list, and a CBR that is of the first carrier and that is obtained by the communication apparatus 2000 through measurement is less than a corresponding CBR threshold. The communication unit 2100 is configured to send the first measurement result to a first terminal device, where the first measurement result is used by the first terminal device to determine a candidate carrier, and the candidate carrier is used to send data through a sidelink between the first terminal device and the communication apparatus 2000.

Optionally, the first carrier list is a carrier list configured by an upper layer of the first terminal device, a carrier list supportable by a network, a carrier list supportable by the first terminal device, or an intersection set of any two or three of the foregoing lists. The communication unit 2100 is further configured to receive the first carrier list from the first terminal device.

Optionally, the first carrier list is a carrier list supported by both the first terminal device and the communication apparatus 2000. The communication unit 2100 is further configured to receive a configuration message from the first terminal device, where the configuration message includes the first carrier list and a feedback periodicity, and the configuration message is used by the communication apparatus 2000 to periodically feed back the CBR of each carrier in the first carrier list based on the feedback periodicity. The communication unit 2100 is specifically configured to send the first measurement result to the first terminal device based on the feedback periodicity.

Optionally, the first carrier list is a carrier list configured by an upper layer of the communication apparatus 2000, a carrier list supportable by a network, a carrier list supportable by the communication apparatus 2000, or an intersection set of any two or three of the foregoing lists.

Optionally, the first measurement result further includes a CBR of each carrier in the second carrier list.

Optionally, the processing unit 2200 is specifically configured to: measure the CBR of each carrier in the first carrier list; and for any carrier in the first carrier list, determine the carrier as the first carrier when the carrier meets a third condition; or if there is no sidelink grant on all carriers in the first carrier list, for any carrier in the first carrier list, determine the carrier as the first carrier when the carrier meets the third condition; or if there is a sidelink grant on a part of or all carriers in the first carrier list, for any carrier that triggers carrier selection in the first carrier list, determine the carrier as the first carrier when the carrier meets a fourth condition, and for any carrier that does not trigger carrier selection in the first carrier list, determine the carrier as the first carrier when the carrier meets the third condition. The third condition is that a CBR that is of the carrier and that is obtained by the communication apparatus 2000 through measurement is less than a second CBR carrier selection threshold corresponding to the carrier; and the fourth condition is that a CBR that is of the carrier and that is obtained by the communication apparatus 2000 through measurement is less than a second CBR carrier keeping threshold corresponding to the carrier.

Optionally, the first measurement result further includes the second CBR carrier selection threshold and/or the second CBR carrier keeping threshold.

Optionally, the communication unit 2100 is further configured to receive, from the first terminal device, a priority of the data or a priority of a logical channel corresponding to the data. The processing unit 2200 is further configured to determine the second CBR carrier selection threshold and/or the second CBR carrier keeping threshold based on the priority of the data or the priority of the logical channel corresponding to the data.

Optionally, the communication unit 2100 is further configured to receive the second CBR carrier selection threshold and/or the second CBR carrier keeping threshold from the first terminal device.

In an implementation, the communication apparatus 2000 may be corresponding to the second terminal device in the method 500, and may perform steps or procedures performed by the second terminal device in the method 500.

Specifically, the communication unit 2100 is configured to receive a first measurement result from a first terminal device, where the first measurement result includes a CBR that is of each carrier in a first carrier list and that is obtained by the first terminal device through measurement, or the first measurement result includes a second carrier list, the first carrier list is a carrier list configured by an upper layer of the first terminal device, a carrier list supportable by a network, a carrier list supportable by the first terminal device, or an intersection set of any two or three of the foregoing lists, the second carrier list includes at least one first carrier in the first carrier list, and a CBR that is of the first carrier and that is obtained by the first terminal device through measurement is less than a corresponding CBR threshold. The processing unit 2200 is configured to measure a CBR of each carrier in the first carrier list or the second carrier list, to obtain a second measurement result. The processing unit 2200 is further configured to determine a candidate carrier based on the first measurement result and the second measurement result, where the candidate carrier is used to send data through a sidelink between the first terminal device and the communication apparatus 2000. The communication unit 2100 is further configured to send information about the candidate carrier to the first terminal.

Optionally, the first measurement result includes the CBR of each carrier in the first carrier list. The processing unit 2200 is specifically configured to: for any carrier in the first carrier list, determine the carrier as the candidate carrier when the carrier meets a third condition; or if there is no sidelink grant on all carriers in the first carrier list, for any carrier in the first carrier list, determine the carrier as the candidate carrier when the carrier meets the third condition; or if there is a sidelink grant on a part of or all carriers in the first carrier list, for any carrier that triggers carrier selection in the first carrier list, determine the carrier as the candidate carrier when the carrier meets a fourth condition, and for any carrier that does not trigger carrier selection in the first carrier list, determine the carrier as the candidate carrier when the carrier meets the third condition. The third condition is that a CBR that is of the carrier and that is obtained by the first terminal device through measurement is less than a first CBR carrier selection threshold corresponding to the carrier, and a CBR that is of the carrier and that is obtained by the communication apparatus 2000 through measurement is less than a second CBR carrier selection threshold corresponding to the carrier, or the third condition is that an average value of a CBR that is of the carrier and that is obtained by the first terminal device through measurement and a CBR that is of the carrier and that is obtained by the communication apparatus 2000 through measurement is less than a first CBR carrier selection threshold corresponding to the carrier or a second CBR carrier selection threshold corresponding to the carrier. The fourth condition is that a CBR that is of the carrier and that is obtained by the first terminal device through measurement is less than a first CBR carrier keeping threshold corresponding to the carrier, and a CBR that is of the carrier and that is obtained by the communication apparatus 2000 through measurement is less than a second CBR carrier keeping threshold corresponding to the carrier, or the fourth condition is that an average value of a CBR that is of the carrier and that is obtained by the first terminal device through measurement and a CBR that is of the carrier and that is obtained by the communication apparatus 2000 through measurement is less than a first CBR carrier keeping threshold corresponding to the carrier or a second CBR carrier keeping threshold corresponding to the carrier.

Optionally, the first measurement result further includes a CBR of each carrier in the second carrier list.

Optionally, the first measurement result includes the second carrier list. The processing unit 2200 is specifically configured to: for any carrier in the second carrier list, determine the carrier as the candidate carrier when the carrier meets a third condition; or if there is no sidelink grant on all carriers in the second carrier list, for any carrier in the second carrier list, determine the carrier as the candidate carrier when the carrier meets the third condition; or if there is a sidelink grant on a part of or all carriers in the second carrier list, for any carrier that triggers carrier selection in the second carrier list, determine the carrier as the candidate carrier when the carrier meets a fourth condition, and for any carrier that does not trigger carrier selection in the second carrier list, determine the carrier as the candidate carrier when the carrier meets the third condition. The third condition is that a CBR that is of the carrier and that is obtained by the communication apparatus 2000 through measurement is less than a second CBR carrier selection threshold corresponding to the carrier; and the fourth condition is that a CBR that is of the carrier and that is obtained by the communication apparatus 2000 through measurement is less than a second CBR carrier keeping threshold corresponding to the carrier.

Optionally, the processing unit 2200 is specifically configured to: for any carrier in the second carrier list, determine the carrier as the candidate carrier when the carrier meets a third condition; or if there is no sidelink grant on all carriers in the second carrier list, for any carrier in the second carrier list, determine the carrier as the candidate carrier when the carrier meets the third condition; or if there is a sidelink grant on a part of or all carriers in the second carrier list, for any carrier that triggers carrier selection in the second carrier list, determine the carrier as the candidate carrier when the carrier meets a fourth condition, and for any carrier that does not trigger carrier selection in the second carrier list, determine the carrier as the candidate carrier when the carrier meets the third condition. The third condition is that an average value of a CBR that is of the carrier and that is obtained by the first terminal device through measurement and a CBR that is of the carrier and that is obtained by the communication apparatus 2000 through measurement is less than a first CBR carrier selection threshold corresponding to the carrier or a second CBR carrier selection threshold corresponding to the carrier. The fourth condition is that an average value of a CBR that is of the carrier and that is obtained by the first terminal device through measurement and a CBR that is of the carrier and that is obtained by the communication apparatus 2000 through measurement is less than a first CBR carrier keeping threshold corresponding to the carrier or a second CBR carrier keeping threshold corresponding to the carrier.

Optionally, the first measurement result further includes one or more of the following: the first CBR carrier selection threshold, the first CBR carrier keeping threshold, the second CBR carrier selection threshold, or the second CBR carrier keeping threshold.

Optionally, the first measurement result further includes a priority of the data or a priority of a logical channel corresponding to the data. The processing unit 2200 is further configured to determine the second CBR carrier selection threshold and/or the second CBR carrier keeping threshold based on the priority of the data or the priority of the logical channel corresponding to the data.

It should be understood that the "unit" in the communication apparatus 2000 may be implemented by hardware, or may be implemented by software, or may be implemented by hardware by executing corresponding software. For example, the "unit" may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. For another example, the communication unit 2100 may be replaced with a transceiver or a transceiver circuit (which, for example, may include a receiver circuit and a transmitter circuit), and the processing unit 2200 may be replaced with a processor or a processing circuit.

FIG. 8 is a block diagram of another communication apparatus 3000 according to an embodiment of this application. The apparatus 3000 may be a first terminal device, or may be a second terminal device, or may be a chip, a chip system, a processor, or the like that supports a first terminal device in implementing the foregoing method, or may be a chip, a chip system, a processor, or the like that supports a second terminal device in implementing the foregoing method. The apparatus may be configured to implement the methods described in the foregoing method embodiments. For details, refer to the descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a user chip, a DU, or a CU), execute a software program, and process data of the software program.

In an optional design, the processor 3100 may alternatively store instructions and/or data, and the instructions and/or data may be run by the processor 3100, to enable the apparatus 3000 to perform the methods described in the foregoing method embodiments.

In another optional design, the apparatus 3000 may include a transceiver 3200 configured to implement receiving and sending functions. For example, the transceiver 3200 may be a transceiver circuit, an interface, or an interface circuit. The transceiver circuit, the interface, or the interface circuit configured to implement receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In another possible design, the apparatus 3000 may include a circuit. The circuit may implement a sending, receiving, or communication function in the foregoing method embodiments.

Optionally, the apparatus 3000 may include one or more memories 3300, which may store instructions. The instructions may be run on the processor 3100, so that the apparatus 3000 performs the methods described in the foregoing method embodiments. Optionally, the memory 3300 may further store data. Optionally, the processor 3100 may also store instructions and/or data. The processor 3100 and the memory 3300 may be separately disposed, or may be integrated together.

FIG. 9 is a diagram of a structure of a terminal device 4000 according to this application. The communication apparatus 2000 or the communication apparatus 3000 may be configured in the terminal device 4000. Alternatively, the communication apparatus 2000 or the communication apparatus 3000 may be the terminal device 4000. In other words, the terminal device 4000 may perform actions performed by the terminal device in the foregoing method embodiments. Optionally, for ease of description, FIG. 9 shows only main components of the terminal device. As shown in FIG. 9, the terminal device 4000 includes a processor, a memory, a control circuit, an antenna, and an input/output apparatus.

The processor is mainly configured to process a communication protocol and communication data, control the entire terminal device, execute a software program, and process data of the software program, for example, configured to support the terminal device in performing actions described in the foregoing method embodiments. The memory is mainly configured to store the software program and data. The control circuit is mainly configured to perform conversion between a baseband signal and a radio frequency signal, and process the radio frequency signal. The control circuit and the antenna together may also be referred to as a transceiver, which is mainly configured to receive and send radio frequency signals in a form of electromagnetic waves. The input/output apparatus, such as a touchscreen, a display, or a keyboard, is mainly configured to: receive data input by a user and output data to the user.

After the terminal device is powered on, the processor may read a software program in a storage unit, interpret and execute instructions of the software program, and process data of the software program. When data needs to be sent in a wireless manner, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 9 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 9 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have sending and receiving functions may be considered as a transceiver unit 4100 of the terminal device 4000, and the processor having a processing function may be considered as a processing unit 4200 of the terminal device 4000. As shown in FIG. 9, the terminal device 4000 includes the transceiver unit 4100 and the processing unit 4200. The transceiver unit may also be referred to as a transceiver machine, a transceiver, a transceiver apparatus, or the like. Optionally, a component that is in the transceiver unit 4100 and that is configured to implement a receiving function may be considered as a receiving unit, and a component that is in the transceiver unit 4100 and that is configured to implement a sending function may be considered as a sending unit. In other words, the transceiver unit 4100 includes the receiving unit and the sending unit. For example, the receiving unit may also be referred to as a receiver, a receive machine, or a receiving circuit, and the sending unit may also be referred to as a transmitter, a transmit machine, or a transmitting circuit.

It should be understood that, in a possible design, the steps in the method embodiments provided in this application may be completed by using a hardware integrated logic circuit in the processor or instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logical device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

This application further provides a computer program product. The computer program product includes computer program code. When the computer program code is run on a computer, the computer is enabled to perform steps or procedures performed by the first terminal device or the second terminal device in any one of the foregoing method embodiments.

This application further provides a computer-readable storage medium. The computer-readable storage medium stores program code. When the program code is run on a computer, the computer is enabled to perform steps or procedures performed by the first terminal device or the second terminal device in any one of the foregoing method embodiments.

This application further provides a communication system. The communication system includes a first terminal device and/or a second terminal device.

The foregoing apparatus embodiments are completely corresponding to the method embodiments, and corresponding modules or units perform corresponding steps. For example, a transceiver unit or a transceiver performs receiving or sending steps in the method embodiments, and steps other than sending and receiving may be performed by a processing unit or a processor.

In embodiments of this application, the terms and English abbreviations are all examples given for ease of description, and should not constitute any limitation on this application. This application does not exclude a possibility of defining another term that can implement a same or similar function in an existing or future protocol.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable storage media that store various data structures. For example, the components may communicate by using a local process and/or a remote process based on a signal having one or more data packets (for example, data from two components interacting with another component in a local system, a distributed system, and/or across a network, such as the internet interacting with other systems by using the signal).

A person of ordinary skill in the art may be aware that, illustrative logical blocks (illustrative logical block) and steps (step) described with reference to embodiments disclosed in this specification can be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

**In** the several embodiments provided in this application, it should be understood that the disclosed system, apparatus, and method may be implemented in other manners. For example, the described apparatus embodiments are merely examples. For example, division into the units is merely logical function division. **In** actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

In the foregoing embodiments, all or some of the functions of the functional units may be implemented by using software, hardware, firmware, or any combination thereof. When software is used to implement the functions, all or some of the functions may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first terminal device, wherein the method comprises:
receiving a first measurement result from a second terminal device, wherein the first measurement result comprises a channel busy ratio CBR that is of each carrier in a first carrier list and that is obtained by the second terminal device through measurement, or the first measurement result comprises a second carrier list, the second carrier list comprises at least one first carrier in the first carrier list, and a CBR that is of the first carrier and that is obtained by the second terminal device through measurement is less than a corresponding CBR threshold; and
determining a candidate carrier based on the first measurement result and a second measurement result, wherein the second measurement result comprises a CBR that is of each carrier in the first carrier list and that is obtained by the first terminal device through measurement, or the second measurement result comprises a CBR that is of each carrier in the second carrier list and that is obtained by the first terminal device through measurement, and the candidate carrier is used to send data through a sidelink between the first terminal device and the second terminal device.

2. The method according to claim 1, wherein the first carrier list is a carrier list configured by an upper layer of the first terminal device, a carrier list supported by a network, a carrier list supported by the first terminal device, or an intersection set of any two or three of the foregoing lists; and
before the receiving a first measurement result from a second terminal device, the method further comprises:
determining the first carrier list; and
sending the first carrier list to the second terminal device.

3. The method according to claim 1, wherein the first carrier list is a carrier list supported by both the first terminal device and the second terminal device;
before the receiving a first measurement result from a second terminal device, the method further comprises:
sending a configuration message to the second terminal device, wherein the configuration message comprises the first carrier list and a feedback periodicity, and the configuration message is used by the second terminal device to periodically feed back the CBR of each carrier in the first carrier list based on the feedback periodicity; and
the receiving a first measurement result from a second terminal device comprises:
receiving the first measurement result fed back by the second terminal device based on the feedback periodicity.

4. The method according to claim 1, wherein the first carrier list is a carrier list configured by an upper layer of the second terminal device, a carrier list supportable by a network, a carrier list supportable by the second terminal device, or an intersection set of any two or three of the foregoing lists.

5. The method according to any one of claims 1 to 4, wherein the first measurement result comprises the CBR that is of each carrier in the first carrier list and that is obtained by the second terminal device through measurement; and
the determining a candidate carrier based on the first measurement result and a second measurement result comprises:
for any carrier in the first carrier list, determining the carrier as the candidate carrier when the carrier meets a first condition; or
if there is no sidelink grant on all carriers in the first carrier list, for any carrier in the first carrier list, determining the carrier as the candidate carrier when the carrier meets the first condition; or
if there is a sidelink grant on a part of or all carriers in the first carrier list, for any carrier that triggers carrier selection in the first carrier list, determining the carrier as the candidate carrier when the carrier meets a second condition, and for any carrier that does not trigger carrier selection in the first carrier list, determining the carrier as the candidate carrier when the carrier meets the first condition, wherein
the first condition is that a CBR that is of the carrier and that is obtained by the first terminal device through measurement is less than a first CBR carrier selection threshold corresponding to the carrier, and a CBR that is of the carrier and that is obtained by the second terminal device through measurement is less than a second CBR carrier selection threshold corresponding to the carrier, or the first condition is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier; and
the second condition is that a CBR that is of the carrier and that is obtained by the first terminal device through measurement is less than a first CBR carrier keeping threshold corresponding to the carrier, and a CBR that is of the carrier and that is obtained by the second terminal device through measurement is less than a second CBR carrier keeping threshold corresponding to the carrier, or the second condition is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

6. The method according to any one of claims 1 to 4, wherein the first measurement result comprises the second carrier list; and
the determining a candidate carrier based on the first measurement result and a second measurement result comprises:
for any carrier in the second carrier list, determining the carrier as the candidate carrier when the carrier meets a first condition; or
if there is no sidelink grant on all carriers in the second carrier list, for any carrier in the second carrier list, determining the carrier as the candidate carrier when the carrier meets the first condition; or
if there is a sidelink grant on a part of or all carriers in the second carrier list, for any carrier that triggers carrier selection in the second carrier list, determining the carrier as the candidate carrier when the carrier meets a second condition, and for any carrier that does not trigger carrier selection in the second carrier list, determining the carrier as the candidate carrier when the carrier meets the first condition, wherein
the first condition is that a CBR that is of the carrier and that is obtained by the first terminal device through measurement is less than a first CBR carrier selection threshold corresponding to the carrier; and
the second condition is that a CBR that is of the carrier and that is obtained by the first terminal device through measurement is less than a first CBR carrier keeping threshold corresponding to the carrier.

7. The method according to any one of claims 1 to 4, wherein the first measurement result further comprises a CBR of each carrier in the second carrier list.

8. The method according to claim 7, wherein the determining a candidate carrier based on the first measurement result and a second measurement result comprises:
for any carrier in the second carrier list, determining the carrier as the candidate carrier when the carrier meets a first condition; or
if there is no sidelink grant on all carriers in the second carrier list, for any carrier in the second carrier list, determining the carrier as the candidate carrier when the carrier meets the first condition; or
if there is a sidelink grant on a part of or all carriers in the second carrier list, for any carrier that triggers carrier selection in the second carrier list, determining the carrier as the candidate carrier when the carrier meets a second condition, and for any carrier that does not trigger carrier selection in the second carrier list, determining the carrier as the candidate carrier when the carrier meets the first condition, wherein
the first condition is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier; and
the second condition is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

9. The method according to claim 5 or 8, wherein the first measurement result further comprises the second CBR carrier selection threshold and/or the second CBR carrier keeping threshold.

10. The method according to claim 5, 8, or 9, wherein before the receiving a first measurement result from a second terminal device, the method further comprises:
sending a priority of the data or a priority of a logical channel corresponding to the data to the second terminal device, wherein the priority of the data or the priority of the logical channel corresponding to the data is used by the second terminal device to determine the second CBR carrier selection threshold and/or the second CBR carrier keeping threshold.

11. The method according to claim 5 or 8, wherein before the receiving a first measurement result from a second terminal device, the method further comprises:
sending the second CBR carrier selection threshold and/or the second CBR carrier keeping threshold to the second terminal device.

12. A communication method, applied to a second terminal device, wherein the method comprises:
determining a first measurement result, wherein the first measurement result comprises a channel busy ratio CBR that is of each carrier in a first carrier list and that is obtained by the second terminal device through measurement, or the first measurement result comprises a second carrier list, the second carrier list comprises at least one first carrier in the first carrier list, and a CBR that is of the first carrier and that is obtained by the second terminal device through measurement is less than a corresponding CBR threshold; and
sending the first measurement result to a first terminal device, wherein the first measurement result is used by the first terminal device to determine a candidate carrier, and the candidate carrier is used to send data through a sidelink between the first terminal device and the second terminal device.

13. The method according to claim 12, wherein the first carrier list is a carrier list configured by an upper layer of the first terminal device, a carrier list supportable by a network, a carrier list supportable by the first terminal device, or an intersection set of any two or three of the foregoing lists; and
before the determining a first measurement result, the method further comprises:
receiving the first carrier list from the first terminal device.

14. The method according to claim 12, wherein the first carrier list is a carrier list supported by both the first terminal device and the second terminal device;
before the determining a first measurement result, the method further comprises:
receiving a configuration message from the first terminal device, wherein the configuration message comprises the first carrier list and a feedback periodicity, and the configuration message is used by the second terminal device to periodically feed back the CBR of each carrier in the first carrier list based on the feedback periodicity; and
the sending the first measurement result to a first terminal device comprises:
sending the first measurement result to the first terminal device based on the feedback periodicity.

15. The method according to claim 12, wherein the first carrier list is a carrier list configured by an upper layer of the second terminal device, a carrier list supportable by a network, a carrier list supportable by the second terminal device, or an intersection set of any two or three of the foregoing lists.

16. The method according to any one of claims 12 to 15, wherein the first measurement result further comprises a CBR of each carrier in the second carrier list.

17. The method according to any one of claims 12 to 16, wherein the determining a first measurement result comprises:
measuring the CBR of each carrier in the first carrier list; and
for any carrier in the first carrier list, determining the carrier as the first carrier when the carrier meets a third condition; or
if there is no sidelink grant on all carriers in the first carrier list, for any carrier in the first carrier list, determining the carrier as the first carrier when the carrier meets the third condition; or
if there is a sidelink grant on a part of or all carriers in the first carrier list, for any carrier that triggers carrier selection in the first carrier list, determining the carrier as the first carrier when the carrier meets a fourth condition, and for any carrier that does not trigger carrier selection in the first carrier list, determining the carrier as the first carrier when the carrier meets the third condition, wherein
the third condition is that a CBR that is of the carrier and that is obtained by the second terminal device through measurement is less than a second CBR carrier selection threshold corresponding to the carrier; and
the fourth condition is that a CBR that is of the carrier and that is obtained by the second terminal device through measurement is less than a second CBR carrier keeping threshold corresponding to the carrier.

18. The method according to claim 17, wherein the first measurement result further comprises the second CBR carrier selection threshold and/or the second CBR carrier keeping threshold.

19. The method according to claim 17 or 18, wherein before the determining a first measurement result, the method further comprises:
receiving, from the first terminal device, a priority of the data or a priority of a logical channel corresponding to the data; and
determining the second CBR carrier selection threshold and/or the second CBR carrier keeping threshold based on the priority of the data or the priority of the logical channel corresponding to the data.

20. The method according to claim 17, wherein before the determining a first measurement result, the method further comprises:
receiving the second CBR carrier selection threshold and/or the second CBR carrier keeping threshold from the first terminal device.

21. A communication method, applied to a first terminal device, wherein the method comprises:
measuring a CBR of each carrier in a first carrier list, wherein the first carrier list is a carrier list configured by an upper layer of the first terminal device, a carrier list supportable by a network, a carrier list supportable by the first terminal device, or an intersection set of any two or three of the foregoing lists;
sending a first measurement result to a second terminal device, wherein the first measurement result comprises the CBR of each carrier in the first carrier list, or the first measurement result comprises a second carrier list, the second carrier list comprises at least one first carrier in the first carrier list, and a CBR that is of the first carrier and that is obtained by the first terminal device through measurement is less than a corresponding CBR threshold; and
receiving information about a candidate carrier from the second terminal device, wherein the candidate carrier is obtained by the second terminal device based on the first measurement result and measurement performed by the second terminal device on a CBR of each carrier in the first carrier list or the second carrier list, and the candidate carrier is used to send data through a sidelink between the first terminal device and the second terminal device.

22. The method according to claim 21, wherein before the sending a first measurement result to a second terminal device, the method further comprises:
for any carrier in the first carrier list, determining the carrier as the first carrier when the carrier meets a first condition; or
if there is no sidelink grant on all carriers in the first carrier list, for any carrier in the first carrier list, determining the carrier as the first carrier when the carrier meets the first condition; or
if there is a sidelink grant on a part of or all carriers in the first carrier list, for any carrier that triggers carrier selection in the first carrier list, determining the carrier as the first carrier when the carrier meets a second condition, and for any carrier that does not trigger carrier selection in the first carrier list, determining the carrier as the first carrier when the carrier meets the first condition, wherein
the first condition is that a CBR that is of the carrier and that is obtained by the first terminal device through measurement is less than a first CBR carrier selection threshold corresponding to the carrier; and
the second condition is that a CBR that is of the carrier and that is obtained by the first terminal device through measurement is less than a first CBR carrier keeping threshold corresponding to the carrier.

23. The method according to claim 21 or 22, wherein the first measurement result further comprises a CBR of each carrier in the second carrier list.

24. The method according to any one of claims 21 to 23, wherein the first measurement result further comprises one or more of the following threshold information: the first CBR carrier selection threshold, the first CBR carrier keeping threshold, a second CBR carrier selection threshold, or a second CBR carrier keeping threshold, and the threshold information is used by the second terminal device to determine the candidate carrier.

25. The method according to any one of claims 21 to 23, wherein the first measurement result further comprises a priority of the data or a priority of a logical channel corresponding to the data, the priority of the data or the priority of the logical channel corresponding to the data is used by the second terminal device to determine a second CBR carrier selection threshold and/or a second CBR carrier keeping threshold, and the second CBR carrier selection threshold and/or the second CBR carrier keeping threshold are/is used by the second terminal device to determine the candidate carrier.

26. A communication method, applied to a second terminal device, wherein the method comprises:
receiving a first measurement result from a first terminal device, wherein the first measurement result comprises a CBR that is of each carrier in a first carrier list and that is obtained by the first terminal device through measurement, or the first measurement result comprises a second carrier list, the first carrier list is a carrier list configured by an upper layer of the first terminal device, a carrier list supportable by a network, a carrier list supportable by the first terminal device, or an intersection set of any two or three of the foregoing lists, the second carrier list comprises at least one first carrier in the first carrier list, and a CBR that is of the first carrier and that is obtained by the first terminal device through measurement is less than a corresponding CBR threshold;
measuring a CBR of each carrier in the first carrier list or the second carrier list, to obtain a second measurement result;
determining a candidate carrier based on the first measurement result and the second measurement result, wherein the candidate carrier is used to send data through a sidelink between the first terminal device and the second terminal device; and
sending information about the candidate carrier to the first terminal device.

27. The method according to claim 26, wherein the first measurement result comprises the CBR of each carrier in the first carrier list; and
the determining a candidate carrier based on the first measurement result and the second measurement result comprises:
for any carrier in the first carrier list, determining the carrier as the candidate carrier when the carrier meets a third condition; or
if there is no sidelink grant on all carriers in the first carrier list, for any carrier in the first carrier list, determining the carrier as the candidate carrier when the carrier meets the third condition; or
if there is a sidelink grant on a part of or all carriers in the first carrier list, for any carrier that triggers carrier selection in the first carrier list, determining the carrier as the candidate carrier when the carrier meets a fourth condition, and for any carrier that does not trigger carrier selection in the first carrier list, determining the carrier as the candidate carrier when the carrier meets the third condition, wherein
the third condition is that a CBR that is of the carrier and that is obtained by the first terminal device through measurement is less than a first CBR carrier selection threshold corresponding to the carrier, and a CBR that is of the carrier and that is obtained by the second terminal device through measurement is less than a second CBR carrier selection threshold corresponding to the carrier, or the third condition is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier; and
the fourth condition is that a CBR that is of the carrier and that is obtained by the first terminal device through measurement is less than a first CBR carrier keeping threshold corresponding to the carrier, and a CBR that is of the carrier and that is obtained by the second terminal device through measurement is less than a second CBR carrier keeping threshold corresponding to the carrier, or the fourth condition is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

28. The method according to claim 26, wherein the first measurement result further comprises a CBR of each carrier in the second carrier list.

29. The method according to claim 26 or 28, wherein the first measurement result comprises the second carrier list; and
the determining a candidate carrier based on the first measurement result and the second measurement result comprises:
for any carrier in the second carrier list, determining the carrier as the candidate carrier when the carrier meets a third condition; or
if there is no sidelink grant on all carriers in the second carrier list, for any carrier in the second carrier list, determining the carrier as the candidate carrier when the carrier meets the third condition; or
if there is a sidelink grant on a part of or all carriers in the second carrier list, for any carrier that triggers carrier selection in the second carrier list, determining the carrier as the candidate carrier when the carrier meets a fourth condition, and for any carrier that does not trigger carrier selection in the second carrier list, determining the carrier as the candidate carrier when the carrier meets the third condition, wherein
the third condition is that a CBR that is of the carrier and that is obtained by the second terminal device through measurement is less than a second CBR carrier selection threshold corresponding to the carrier; and
the fourth condition is that a CBR that is of the carrier and that is obtained by the second terminal device through measurement is less than a second CBR carrier keeping threshold corresponding to the carrier.

30. The method according to claim 28, wherein the determining a candidate carrier based on the first measurement result and the second measurement result comprises:
for any carrier in the second carrier list, determining the carrier as the candidate carrier when the carrier meets a third condition; or
if there is no sidelink grant on all carriers in the second carrier list, for any carrier in the second carrier list, determining the carrier as the candidate carrier when the carrier meets the third condition; or
if there is a sidelink grant on a part of or all carriers in the second carrier list, for any carrier that triggers carrier selection in the second carrier list, determining the carrier as the candidate carrier when the carrier meets a fourth condition, and for any carrier that does not trigger carrier selection in the second carrier list, determining the carrier as the candidate carrier when the carrier meets the third condition, wherein
the third condition is that an average value of a CBR that is of the carrier and that is obtained by the first terminal device through measurement and a CBR that is of the carrier and that is obtained by the second terminal device through measurement is less than a first CBR carrier selection threshold corresponding to the carrier or a second CBR carrier selection threshold corresponding to the carrier; and
the fourth condition is that an average value of a CBR that is of the carrier and that is obtained by the first terminal device through measurement and a CBR that is of the carrier and that is obtained by the second terminal device through measurement is less than a first CBR carrier keeping threshold corresponding to the carrier or a second CBR carrier keeping threshold corresponding to the carrier.

31. The method according to any one of claims 26 to 30, wherein the first measurement result further comprises one or more of the following: the first CBR carrier selection threshold, the first CBR carrier keeping threshold, the second CBR carrier selection threshold, or the second CBR carrier keeping threshold.

32. The method according to claim 27, 29, or 30, wherein the first measurement result further comprises a priority of the data or a priority of a logical channel corresponding to the data; and
the method further comprises:
determining the second CBR carrier selection threshold and/or the second CBR carrier keeping threshold based on the priority of the data or the priority of the logical channel corresponding to the data.

33. A communication apparatus, comprising units configured to perform steps of the method according to any one of claims 1 to 11, any one of claims 12 to 20, any one of claims 21 to 25, or any one of claims 26 to 32.

34. A communication apparatus, comprising a processor, wherein the processor is coupled to a memory, the memory is configured to store a program or instructions, and when the program or the instructions are executed by the processor, the apparatus is enabled to perform the method according to any one of claims 1 to 11, any one of claims 12 to 20, any one of claims 21 to 25, or any one of claims 26 to 32.

35. A computer-readable storage medium, wherein the computer-readable storage medium stores a computer program or instructions, and when the computer program or the instructions are executed, a computer is enabled to perform the method according to any one of claims 1 to 11, any one of claims 12 to 20, any one of claims 21 to 25, or any one of claims 26 to 32.

36. A computer program product, comprising computer program instructions, wherein the computer program instructions enable a computer to perform the method according to any one of claims 1 to 11, any one of claims 12 to 20, any one of claims 21 to 25, or any one of claims 26 to 32.

37. A chip, comprising a processor, configured to invoke a computer program from a memory and run the computer program, to enable a communication apparatus on which the chip is installed to perform the method according to any one of claims 11 to 11, any one of claims 12 to 20, any one of claims 21 to 25, or any one of claims 26 to 32.
